# EUROPEAN PATENT APPLICATION

(11) **EP 4 553 118 A1**
(43) Date of publication of application: **14.05.2025**
(21) Application number: 23835149.8
(22) Date of filing: 15.05.2023
(51) Int. Cl.: C08L 101/00, B05D 7/24, B32B 27/08, C08F 20/54, C08K 3/013, C08L 33/24, C09D 5/00, C09D 5/02, C09D 7/20, C09D 7/63, C09D 133/24

(54) **WATER-DISPERSIBLE RESIN PARTICLE, AQUEOUS COATING COMPOSITION, COATED ARTICLE, AND PRODUCTION METHODS THEREFOR**

(30) Priority: 05.07.2022 JP 2022108416
(71) Applicant: Nippon Paint Automotive Coatings Co., Ltd., Hirakata-shi, Osaka 573-1153 (JP)
(72) Inventor: SUZUKI, Satoshi, Hirakata-shi, Osaka 573-1153 (JP)
(74) Representative: Mewburn Ellis LLP
(86) International application number: PCT/JP2023/018129
(87) International publication number: WO 2024/009610

(57) **Abstract**

Provided is a water-dispersible resin particle capable of obtaining a coating film having both a superior design property and superior adhesion. A water-dispersible resin particle comprising a constitutional unit derived from a monomer having one or more amide groups, wherein a content of the constitutional unit derived from the monomer is 1% by mass or more and 20% by mass or less of all constitutional units, and a hydroxyl value is 1 mg KOH/g or less. Preferably, the particle comprises a constitutional unit derived from another monomer different from the monomer having one or more amide groups, wherein a glass transition temperature of a homopolymer obtained by polymerizing the another monomer is 80°C or higher, and a content of the constitutional unit derived from the another monomer is 70% by mass or more of all constitutional units.

## Description

### TECHNICAL FIELD

The present invention relates to a water-dispersible resin particle, a water-borne coating composition, a coated article, and a method for producing the coated article.

### BACKGROUND ART

A plurality of coating films having various roles are formed on the surface of an article to be coated such as a metal substrate. A coating film protects an article to be coated and, imparts a design property to the article. Patent Document 1 discloses a metallic color coating composition containing an aluminum flake pigment.

### PRIOR ART DOCUMENT

### PATENT DOCUMENT

Patent Document 1: JP-A-2005-239801

### SUMMARY OF THE INVENTION

### PROBLEMS TO BE SOLVED BY THE INVENTION

The design property is improved as the concentration of the pigment contained in the coating film is increased. However, when the pigment concentration increases, the adhesion of the coating film tends to decrease.

An object of the present invention is to provide a water-dispersible resin particle capable of affording a coating film having both a superior design property and superior adhesion. Another object of the present invention is to provide a water-borne coating composition containing the water-dispersible resin particle, a coated article, and a method for producing the same.

### SOLUTIONS TO THE PROBLEMS

The present invention provides the following embodiments [1] to [15].
[1] A water-dispersible resin particle comprising a constitutional unit derived from a monomer having one or more amide groups,
   wherein a content of the constitutional unit derived from the monomer is 1% by mass or more and 20% by mass or less of all constitutional units, and
   a hydroxyl value is 1 mg KOH/g or less.
[2] The water-dispersible resin particle according to [1], further comprising a constitutional unit derived from another monomer different from the monomer having one or more amide groups,
   wherein a glass transition temperature of a homopolymer obtained by polymerizing the another monomer is 80°C or higher, and
   a content of the constitutional unit derived from the another monomer is 70% by mass or more of all constitutional units.
[3] A water-borne coating composition comprising:
   the water-dispersible resin particle according to [1] or [2];
   a coating film-forming resin;
   a curing agent;
   a pigment; and
   a diluent component containing water.
[4] The water-borne coating composition according to [3], wherein
   the diluent component further contains an organic solvent,
   the organic solvent contains a first organic solvent having a solubility in water at 20°C of 0.1% by mass or more and 7% by mass or less and a second organic solvent having a solubility in water at 20°C of less than 0.1% by mass,
   a content of the first organic solvent is 0.4% by mass or more and 5% by mass or less, and
   a content of the second organic solvent is 0.05% by mass or more and 2.5% by mass or less.
[5] The water-borne coating composition according to [3], wherein the pigment contains at least one selected from the group consisting of a coloring pigment, a scaly pigment, and an extender pigment.
[6] A coated article comprising:
   an article to be coated; and
   a base coating film formed on the article to be coated,
   wherein the base coating film is formed of the water-borne coating composition according to [3].
[7] The coated article according to [6], further comprising a clear coating film formed on the base coating film.
[8] A coated article comprising:
   an article to be coated;
   an intermediate coating film formed on the article to be coated; and
   a base coating film formed on the intermediate coating film,
   wherein the base coating film is formed of the water-borne coating composition according to [3].
[9] The coated article according to [8], further comprising a clear coating film formed on the base coating film.
[10] A method for producing a coated article, comprising:
   applying a basecoat composition onto an article to be coated to form an uncured base coating film; and
   curing the uncured base coating film,
   wherein the basecoat composition contains the water-borne coating composition according to [3].
[11] The method for producing a coated article according to [10], wherein
   the method comprises, after forming the uncured base coating film and before curing, applying a clear coating composition onto the uncured base coating film to form an uncured clear coating film, and
   in curing, the uncured base coating film and the uncured clear coating film are cured.
[12] A method for producing a coated article, comprising:
   applying an intermediate coating composition onto an article to be coated to form an uncured intermediate coating film;
   applying a basecoat composition onto the uncured intermediate coating film to form an uncured base coating film; and
   curing the uncured intermediate coating film and the uncured base coating film,
   wherein the basecoat composition contains the water-borne coating composition according to [3].
[13] The method for producing a coated article according to [12], wherein
   the method comprises, after forming the uncured base coating film and before curing, applying a clear coating composition onto the uncured base coating film to form an uncured clear coating film, and
   in curing, the uncured intermediate coating film, the uncured base coating film and the uncured clear coating film are cured.
[14] A method for producing a coated article, comprising:
   applying an intermediate coating composition onto an article to be coated to form an uncured intermediate coating film;
   first curing the uncured intermediate coating film;
   applying a basecoat composition onto the cured intermediate coating film to form an uncured base coating film; and
   second curing the uncured base coating film,
   wherein the basecoat composition contains the water-borne coating composition according to [3].
[15] The method for producing a coated article according to [14], wherein
   the method comprises, after forming the uncured base coating film and before second curing, a applying a clear coating composition onto the uncured base coating film to form an uncured clear coating film, and
   in second curing, the uncured base coating film and the uncured clear coating film are cured.

### EFFECTS OF THE INVENTION

According to the present invention, a water-dispersible resin particle capable of affording a coating film having both a superior design property and superior adhesion is provided. According to the present invention, a water-borne coating composition containing the water-dispersible resin particle, a coated article, and a method for producing the same are provided.

### BRIEF DESCRIPTION OF THE DRAWINGS

Fig. 1 is a sectional view schematically illustrating a coated article according to one embodiment of the present invention.
Fig. 2 is a sectional view schematically illustrating a coated article according to another embodiment of the present invention.
Fig. 3 is a sectional view schematically illustrating a coated article according to still another embodiment of the present invention.
Fig. 4 is a sectional view schematically illustrating a coated article according to still another embodiment of the present invention.
Fig. 5 is a flowchart of a method for producing a coated article according to one embodiment of the present invention.
Fig. 6 is a flowchart of a method for producing a coated article according to another embodiment of the present invention.
Fig. 7 is a flowchart of a method for producing a coated article according to still another embodiment of the present invention.

### DETAILED DESCRIPTION

The water-dispersible resin particle according to the present disclosure contains a constitutional unit derived from a monomer having one or more amide groups. The content of the constitutional unit derived from the monomer is 1% by mass or more and 20% by mass or less of all constitutional units, and the hydroxyl value of the water-dispersible resin particle is 1 mg KOH/g or less. That is, the water-dispersible resin particle according to the present disclosure has amide groups (-NH₂) but has almost no hydroxy groups (-OH).

The water-dispersible resin particle according to the present disclosure can contribute to improvement of the viscosity of the coating composition in a state where shear energy is low. Therefore, the viscosity of an uncured coating film formed by applying the coating composition to an article to be coated is maintained at an appropriately high level by the water-dispersible resin particle, so that the convection and flow in the uncured coating film are reduced. As a result, the orientation property of the pigment is improved, so that the design property is improved.

In addition, the water-dispersible resin particle according to the present disclosure enhances the cohesive force of the components contained in the coating composition by the action of the amide groups. The amide group has a particularly large dipole moment, and therefore causes a strong interaction (typically, van der Waals force) between molecules. Accordingly, cohesive failure of the coating film is also reduced, and adhesion of the coating film is further improved. When the adhesion of the coating film is improved, scratch resistance, chipping resistance, chemical resistance (acid rain resistance), light degradation resistance, water resistance, and the like of the coating film are readily improved. When a coating film of an automobile body is formed from a water-borne coating composition containing the water-dispersible resin particle, peeling of the coating film particularly during high-pressure cleaning is reduded.

The fact that the water-dispersible resin particle has a low hydroxyl value also contributes to the improvement in design property and adhesion. In a coating composition is commonly blended a viscosity agent. The viscosity agent facilitates cohesion of a coating film-forming resin and enhances the orientation of a pigment through controlling the viscosity of the coating composition. However, the function of the viscosity agent may not be exerted. Although the reason is not clear, it is considered that the viscosity agent excessively interacts with a hydrophobic component in the coating composition. Since the water-dispersible resin particle according to the present disclosure has an extremely low hydroxyl value, the water-dispersible resin particle can be interposed between the hydrophobic component and the viscosity agent in the coating composition, and prevents interaction between the hydrophobic component and the viscosity agent. As a result, a decrease in the function of the viscosity agent can be suppressed.

The amide group may also affect the function of the viscosity agent. However, the water-dispersible resin particle according to the present disclosure has a small surface area because of being particulate, and has only a slight number of amide groups on the particle surface. Therefore, the water-dispersible resin particle hardly affects the function of the viscosity agent although having amide groups.

In order to exert the effect of the water-dispersible resin particle, it is important that amide groups and hydroxy group do not coexist as much as possible in the particle. It is allowable to use another resin having hydroxy groups in combination with the water-dispersible resin particle.

### [Water-dispersible resin particle]

The water-dispersible resin particle according to the present disclosure contains a constitutional unit derived from a monomer having one or more amide groups (hereinafter, this monomer may be referred to as amide monomer) (hereinafter, this constitutional unit may be referred to as first constitutional unit). The content of the first constitutional unit is 1% by mass or more and 20% by mass or less of all constitutional units. The hydroxyl value of the water-dispersible resin particle according to the present disclosure is 1 mg KOH/g or less. That is, the water-dispersible resin particle contains amide groups but contains few hydroxy groups. When the water-dispersible resin particle is added to a water-borne coating composition, a coating film superior in adhesion and design property is obtained.

The water-dispersible resin particle has the form of an emulsion in which the particle is dispersed in water. The water-dispersible resin particle is suitably used as an additive for a water-borne coating composition.

The particle size of the water-dispersible resin particle is not limited. The average particle size of the water-dispersible resin particle is, for example, 50 nm or more, may be 100 nm or more, or may be 200 nm or more. The average particle size of the water-dispersible resin particle may be 500 nm or less, or may be 300 nm or less. In one embodiment, the average particle size of the water-dispersible resin particle is 50 nm or more and 500 nm or less. The average particle size of the water-dispersible resin particle is a 50% average particle size (D50) in a volume-based particle size distribution determined using a laser diffraction/scattering type particle size distribution analyzer. The same applies to the average particle size of the base particle described later.

The number average molecular weight of the water-dispersible resin particle is, for example, 5,000 or more and 30,000 or less. The number average molecular weight of the water-dispersible resin particle may be 7,000 or more. The number average molecular weight of the water-dispersible resin particle may be 28,000 or less. The number average molecular weight can be determined by a GPC method using polystyrene as a standard.

The hydroxyl value of the water-dispersible resin particle is 1 mg KOH/g or less, and a lower hydroxyl value is preferable. The hydroxyl value of the water-dispersible resin particle may be 0.5 mg KOH/g or less, may be 0.2 mg KOH/g or less, and may be 0 mg KOH/g.

From the viewpoint of the curability of a coating film, the acid value of the water-dispersible resin particle may be 3 mg KOH/g or more, and may be 7 mg KOH/g or more. The acid value of the water-dispersible resin particle may be 40 mg KOH/g or less, and may be 50 mg KOH/g or less. The acid value and the hydroxyl value can be determined by actual measurement or calculation using a known method.

The amide monomer is not limited as long as it is a polymerizable monomer having one or more amide groups. Examples of the amide monomer include an α,β-ethylenically unsaturated monomer having an amide group.

Examples of the α,β-ethylenically unsaturated monomer containing an amide group include (meth)acrylamide, N-methylol(meth)acrylamide, N-butoxymethyl(meth)acrylamide, N,N-dimethyl(meth)acrylamide, N,N-dibutyl(meth)acrylamide, N,N-dioctyl(meth)acrylamide, N-monobutyl(meth)acrylamide, N-monooctyl(meth)acrylamide 2,4-dihydroxy-4'-vinylbenzophenone, N-(2-hydroxyethyl)acrylamide, and N-(2-hydroxyethyl)methacrylamide. "(Meth)acryl" as referred to in the present description is a concept including both acryl and methacryl. As to the amide monomer, a single type thereof is used alone, or two or more types thereof are used in combination.

The water-dispersible resin particle is a copolymer of an amide monomer and a monomer other than the amide monomer (hereinafter, the monomer is simply referred to as another monomer). The content of the first constitutional unit derived from the amide monomer is 1% by mass or more and 20% by mass or less of all constitutional units. As a result, hydration stability is improved, and the function of the viscosity agent is hardly inhibited. The content of the first constitutional unit may be 3% by mass or more, and may be 5% by mass or more of all constitutional units. The content of the first constitutional unit may be 15% by mass or less of all constitutional units. The content of the first constitutional unit with respect to all constitutional units can be calculated from the amount of the amide monomer charged/(the amount of the amide monomer charged + the amount of the another monomer charged) at the time of synthesizing the water-dispersible resin particle.

The another monomer is not limited as long as it contains no amide group and is polymerizable. Examples of the another monomer include an α,β-ethylenically unsaturated monomer having no amide group. The another monomer may have a hydroxy group as long as the water-dispersible resin particle comes to have a hydroxyl value of 1 mg KOH/g or less.

Examples of the α,β-ethylenically unsaturated monomer containing no amide group include acid group-containing monomers such as acrylic acid, methacrylic acid, acrylic acid dimer, crotonic acid, 2-acryloyloxyethylphthalic acid, 2-acryloyloxyethylsuccinic acid, ω-carboxy-polycaprolactone mono(meth)acrylate, isocrotonic acid, α-hydro-ω-((1-oxo-2-propenyl)oxy) poly(oxy(1-oxo-1,6-hexanediyl)), maleic acid, fumaric acid, itaconic acid, 3-vinylsalicylic acid, 3-vinylacetylsalicylic acid, 2-acryloyloxyethyl acid phosphate, and 2-acrylamido-2-methylpropanesulfonic acid.

Examples of the α,β-ethylenically unsaturated monomer containing no amide group further include (meth)acrylate esters (e.g., methyl (meth)acrylate, ethyl (meth)acrylate, n-propyl (meth)acrylate, n-butyl (meth)acrylate, isobutyl (meth)acrylate, t-butyl (meth)acrylate, 2-ethylhexyl (meth)acrylate, lauryl methacrylate, phenyl acrylate, isobornyl (meth)acrylate, cyclohexyl methacrylate, t-butylcyclohexyl (meth)acrylate, dicyclopentadienyl (meth)acrylate, and dihydrodicyclopentadienyl (meth)acrylate), polymerizable aromatic compounds (e.g., styrene (ST), α-methylstyrene, vinyl ketone, t-butylstyrene, parachlorostyrene, and vinylnaphthalene), polymerizable nitriles (e.g., acrylonitrile and methacrylonitrile), α-olefins (e.g., ethylene and propylene), vinyl esters (e.g., vinyl acetate and vinyl propionate), and dienes (e.g., butadiene and isoprene).

Examples of the α,β-ethylenically unsaturated monomer containing a hydroxy group include 2-hydroxyethyl (meth)acrylate, hydroxypropyl (meth)acrylate, hydroxybutyl (meth)acrylate, allyl alcohol, methacryl alcohol, and an adduct of hydroxyethyl (meth)acrylate and ε-caprolactone.

As to the another monomer, a single type thereof is used alone, or two or more types thereof are used in combination.

Among them, a monomer from which a homopolymer having a glass transition temperature (Tg) of 80°C or higher is obtained (hereinafter, the monomer is referred to as high-Tg monomer) may be contained as the another monomer. As a result, the Tg of the resulting water-dispersible resin particle is increased, and the particle shape is readily maintained in the water-borne coating composition. In addition, in the step of curing the coating film, the water-dispersible resin particle is deformed to contribute to improvement in the adhesion of the coating film. The Tg of the homopolymer of the high-Tg monomer is desirably higher, and may be 90°C or higher, and may be 100°C or higher.

Examples of the high-Tg monomer include styrene (ST, 100°C), methyl methacrylate (MMA, 105°C), t-butyl methacrylate (TBMA, 107°C), and methacrylic acid (MAA, 187°C). The temperature in the parentheses is the Tg of the homopolymer. The molecular weight of the homopolymer is not limited as long as it is sufficiently large to such an extent that the Tg is constant.

The content of the constitutional unit derived from the high-Tg monomer (hereinafter, this constitutional unit may be referred to as second constitutional unit) may be 70% by mass or more of all constitutional units, and may be 75% by mass or more, 80% by mass or more, 85% by mass or more, or 90% by mass or more. The content of the second constitutional unit may be 100% by mass or less, may be 99% by mass or less, and may be 98% by mass or less of all constitutional units. The content of the second constitutional unit with respect to all constitutional units can be calculated from the charged amount of the high-Tg monomer when the water-dispersible resin particle is synthesized.

The water-dispersible resin particle is obtained by emulsion polymerization of a starting monomer including an amide monomer and another monomer. The emulsion polymerization is performed by a method commonly performed by those skilled in the art. Specifically, an emulsifier is mixed in a water-borne medium containing an organic solvent such as alcohol as necessary, and while the mixture obtained is heated and stirred, the starting monomer and a polymerization initiator are added dropwise. In addition, an emulsified mixture in which the starting monomer, the emulsifier, and water are emulsified in advance may be dropped into the aqueous medium.

The emulsion polymerization may be one-step polymerization, two-step polymerization, or multi-step polymerization including three or more steps. In the two-stage polymerization, a part of the starting monomer is subjected to emulsion polymerization, and then the remaining starting monomer is added thereto to perform emulsion polymerization. For example, after emulsion polymerization of another monomer, an amide monomer is added to an emulsion containing a polymer of the another monomer, and further emulsion polymerization is performed. In this case, the particle size of the water-dispersible resin particle can be adjusted by choosing the time of addition of the amide monomer.

Examples of the polymerization initiator include an azo-based oily compound or aqueous compound, and a redox-based oily peroxide or aqueous peroxide. Examples of the azo-based oily compound include azobisisobutyronitrile, 2,2'-azobis(2-methylbutyronitrile), and 2,2'-azobis(2,4-dimethylvaleronitrile). Examples of the azo-based aqueous compound include anionic 4,4'-azobis(4-cyanovaleric acid) and 2,2-azobis(N-(2-carboxyethyl)-2-methylpropionamidine, which are anionic, and 2,2'-azobis(2-methylpropionamidine), which is cationic. Examples of the redox-based oily peroxide include benzoyl peroxide, p-chlorobenzoyl peroxide, lauroyl peroxide, and t-butyl perbenzoate. Examples of the redox-based aqueous peroxide include potassium persulfate and ammonium persulfate.

As the emulsifier, emulsifiers commonly used by those skilled in the art can be used. The emulsifier may be a reactive emulsifier. Examples of the reactive emulsifier include Antox MS-60 (produced by Nippon Nyukazai Co., Ltd.), ELEMINOL JS-2 (produced by Sanyo Chemical Industries, Ltd.), ADEKA REASOAP NE-20 (produced by ADEKA Corporation), and AQUALON HS-10 (produced by DKS Co., Ltd.).

In order to adjust the molecular weight, a chain transfer agent, such as a mercaptan compound, e.g., lauryl mercaptan, and α-methylstyrene dimer, may be used, as necessary.

The reaction temperature is determined depending on the polymerization initiator, and for example, the reaction can be performed at a temperature of 60°C or higher and 90°C or lower for an azo-based polymerization initiator, and at a temperature of 30°C or higher and 70°C or lower for a redox-based polymerization initiator. In general, the reaction time is 1 hour or more and 8 hours or less. The amount of the polymerization initiator with respect to the total amount of the monomers is generally 0.1% by mass or more and 5% by mass or less, and may be 0.2% by mass or more and 2% by mass or less.

The water-dispersible resin particle may be neutralized with a base, as necessary. Thus, the water-dispersible resin particle can be used at a pH of 5 or more and 10 or less.

### [Water-borne coating composition]

The water-borne coating composition according to the present disclosure includes the water-dispersible resin particle, a coating film-forming resin, a curing agent, a pigment, and a diluent component containing water.

### (Water-dispersible resin particle)

Details of the water-dispersible resin particle are as described above. As to the water-dispersible resin particle, a single type thereof is used, or two or more types thereof are used in combination.

The content of the water-dispersible resin particle is not limited. The content of the water-dispersible resin particle may be 1% by mass or more, may be 3% by mass or more, and may be 5% by mass or more in the resin solids of the water-borne coating composition. The content of the water-dispersible resin particle may be 20% by mass or less, may be 15% by mass or less, and may be 10% by mass or less in the resin solids of the water-borne coating composition.

### (Coating film-forming resin)

The coating film-forming resin is not limited, and resins conventionally known in the field of water-borne coating composition are used. The form of the coating film-forming resin is not limited. The form of the coating film-forming resin may be a water-borne solution, may be a water-borne dispersion, and may be an emulsion.

The coating film-forming resin may have hydroxy groups. Due to the merit that the durability of a resulting coating film is readily further improved, the coating film-forming resin may have hydroxy groups. The hydroxyl value of the coating film-forming resin may be 10 mg KOH/g or more, and may be 20 mg KOH/g or more. The hydroxyl value of the coating film-forming resin may be 150 mg KOH/g or less, and may be 100 mg KOH/g or less. In one embodiment, the hydroxyl value of the coating film-forming resin is 10 mg KOH/g or more and 150 mg KOH/g or less.

The acid value of the coating film-forming resin may be 10 mg KOH/g or more, and may be 15 mg KOH/g or more. The acid value of the coating film-forming resin may be 80 mg KOH/g or less, and may be 70 mg KOH/g or less. In one aspect, the acid value of the coating film-forming resin is 10 mg KOH/g or more and 80 mg KOH/g or less.

Due to the merit that various physical properties of a resulting coating film are readily improved, the Tg of the coating film-forming resin may be -20°C or higher and 80°C or lower.

The acid value, hydroxyl value, acid value, and Tg of the coating film-forming resin can be determined by actual measurement. Alternatively, the acid value, hydroxyl value, and Tg of the coating film-forming resin may be calculated in consideration of the blending amounts of various unsaturated monomers in the starting monomer. In the present description, the acid value, hydroxyl value, and Tg of the shell part obtained by emulsion polymerization of the starting monomer are values calculated in consideration of the blending amounts of various unsaturated monomers in the starting monomer.

The number average molecular weight of the coating film-forming resin is not limited. The number average molecular weight of the coating film-forming resin may be 5,000 or more, and may be 7,000 or more. The number average molecular weight of the coating film-forming resin may be 30,000 or less, and may be 25,000 or less. In one embodiment, the number average molecular weight of the coating film-forming resin is 5,000 or more and 30,000 or less.

The non-volatile content of the coating film-forming resin is not limited. From the viewpoint of coating workability, the non-volatile content of the coating film-forming resin may be 5% by mass or more, may be 10% by mass or more, and may be 20% by mass or more of the non-volatile content of the water-borne coating composition. The non-volatile content of the coating film-forming resin may be 95% by mass or less, may be 85% by mass or less, and may be 70% by mass or less of the non-volatile content of the water-borne coating composition. In one embodiment, the non-volatile content of the coating film-forming resin is 5% by mass or more and 95% by mass or less of the non-volatile content of the water-borne coating composition.

Examples of the coating film-forming resin include an acrylic resin, a polyester resin, a hydroxy group-containing polyester resin, an alkyd resin, a polyether resin, a polyether polyol resin, a polyolefin resin, a urethane resin, a hydroxy group-containing urethane resin, a polycarbonate resin, a melamine resin, an epoxy resin, and a carbodiimide resin. As to the coating film-forming resin, a single type thereof is used alone, or two or more types thereof are used in combination.

Among them, an acrylic resin and/or a polyester resin are preferable in terms of weather resistance and water resistance, an acrylic resin is more preferable, and a core-shell type acrylic resin may also be used.

The core part of the core-shell type acrylic resin is, for example, a polymer of a starting monomer (a) including a polyfunctional unsaturated monomer containing two or more (meth)acrylate groups or vinyl groups in one molecule. The core part has a crosslinked structure. The starting monomer (a) may include another unsaturated monomer other than the polyfunctional unsaturated monomer.

The polyfunctional unsaturated monomer is not limited. Examples of the polyfunctional unsaturated monomer include ethylene glycol dimethacrylate and divinylbenzene.

Due to the merit that the design property of a resulting coating film is readily further improved, the content of the polyfunctional unsaturated monomer may be 1% by mass or more, and may be 5% by mass or more of the starting monomer (a). Due to the merit that the smoothness of a resulting coating film is readily improved, the content of the polyfunctional unsaturated monomer may be 20% by mass or less, and may be 15% by mass or less of the starting monomer (a). In one embodiment, the content of the polyfunctional unsaturated monomer is 1% by mass or more and 20% by mass or less of the starting monomer (a).

The shell part of the core-shell type acrylic resin is, for example, a polymer of a starting monomer (b) including a carboxylic acid group-containing unsaturated monomer. The starting monomer (b) may include another unsaturated monomer other than the carboxylic acid group-containing unsaturated monomer.

The carboxylic acid group-containing unsaturated monomer is not limited. Examples of the carboxylic acid group-containing unsaturated monomer include acrylic acid, methacrylic acid, acrylic acid dimer, crotonic acid, 2-acryloyloxyethylphthalic acid, 2-acryloyloxyethylsuccinic acid, 2-acryloyloxyethyl acid phosphate, 2-acrylamido-2-methylpropanesulfonic acid, ω-carboxy-polycaprolactone mono(meth)acrylate, isocrotonic acid, α-hydro-ω-[(1-oxo-2-propenyl)oxy] poly[oxy(1-oxo-1,6-hexanediyl)], maleic acid, fumaric acid, itaconic acid, 3-vinylsalicylic acid, and 3-vinylacetylsalicylic acid.

Due to the merit that the coating workability is readily improved, the acid value of the carboxylic acid group-containing unsaturated monomer may be 3 mg KOH/g or more, and may be 7 mg KOH/g or more. Due to the merit that the water resistance of a resulting coating film is readily further improved, the acid value of the carboxylic acid group-containing unsaturated monomer may be 50 mg KOH/g or less, and may be 40 mg KOH/g or less. In one embodiment, the carboxylic acid group-containing unsaturated monomer has an acid value of 3 mg KOH/g or more and 50 mg KOH/g or less.

The starting monomer (a) and/or the starting monomer (b) may include at least one of methyl (meth)acrylate and ethyl (meth)acrylate as the other unsaturated monomer. The appearance of a resulting coating film is thereby improved. The content of methyl (meth)acrylate and ethyl (meth)acrylate is, for example, 65% by mass or more of the total of the starting monomers (a) and (b).

The starting monomer (a) and/or starting monomer (b) may include a hydroxy group-containing unsaturated monomer as the other unsaturated monomer. The durability of a resulting coating film can thereby be further improved.

Examples of the hydroxy group-containing unsaturated monomer include 2-hydroxyethyl (meth)acrylate, 2-hydroxypropyl (meth)acrylate, 4-hydroxybutyl (meth)acrylate, allyl alcohol, methacryl alcohol, and an ε-caprolactone adduct of hydroxyethyl (meth)acrylate. In particular, hydroxyethyl (meth)acrylate, hydroxybutyl (meth)acrylate, and an ε-caprolactone adduct of hydroxyethyl (meth)acrylate may be preferably used.

The starting monomer (a) and/or starting monomer (b) may further include still another monomers, as necessary. Examples of such still another monomer include (meth)acrylic acid esters having an ester group having 3 or more carbon atoms (e.g., n-butyl (meth)acrylate, isobutyl (meth)acrylate, t-butyl (meth)acrylate, 2-ethylhexyl (meth)acrylate, lauryl methacrylate, phenyl acrylate, isobornyl (meth)acrylate, cyclohexyl methacrylate, t-butylcyclohexyl (meth)acrylate, dicyclopentadienyl (meth)acrylate, and dihydrodicyclopentadienyl (meth)acrylate), polymerizable amide compounds (e.g., (meth)acrylamide, N-methylol(meth)acrylamide, N,N-dibutyl(meth)acrylamide, N,N-dioctyl(meth)acrylamide, N-monobutyl(meth)acrylamide, N-monooctyl(meth)acrylamide 2,4-dihydroxy-4'-vinylbenzophenone, N-(2-hydroxyethyl)acrylamide, and N-(2-hydroxyethyl)methacrylamide), polymerizable aromatic compounds (e.g., styrene, α-methylstyrene, vinyl ketone, t-butylstyrene, parachlorostyrene, and vinylnaphthalene), polymerizable nitriles (e.g., acrylonitrile and methacrylonitrile), α-olefins (e.g., ethylene and propylene), vinyl esters (e.g., vinyl acetate and vinyl propionate), and dienes (e.g., butadiene and isoprene). When hydrophilicity is imparted to the coating film-forming resin, (meth)acrylamide may be used as said still another monomer.

The core-shell type acrylic resin can be obtained via two-stage emulsion polymerization. Specifically, a core part having a crosslinked structure is obtained via emulsion polymerization of the starting monomer (a), then the starting monomer (b) is added to this reaction system, and a shell part is obtained via emulsion polymerization. In this case, the core-shell type acrylic resin has an emulsion form.

Other coating film-forming resins can also be obtained via one-step or two-step or more emulsion polymerization. In this case, the coating film-forming resin has an emulsion form. As the emulsion polymerization, the same method as the method described as the method for producing the water-dispersible resin particle is employed.

The particle size of the coating film-forming resin in an emulsion form (hereinafter, this type of coating film-forming resin may be referred to as base particle) is not limited. In terms of viscosity control and the appearance of a resulting coating film, the average particle size of the base particle may be 0.01 µm or more, and may be 0.05 µm or more. The average particle size of the base particle may be 1.0 µm or less, and may be 0.5 µm or less. In one embodiment, the average particle size of the base particle is 0.01 µm or more and 1.0 µm or less.

The base particle may be neutralized with a base, as necessary. This makes it possible to use the base particle at a pH of 5 or more and 10 or less. The neutralization may be carried out by adding a basic compound to the system before or after the emulsion polymerization. Examples of the basic compound include ammonia, sodium hydroxide, potassium hydroxide, monoethanolamine, monomethylethanolamine, dimethylethanolamine, diethylethanolamine, or triethylamine.

### (Pigment)

The water-borne coating composition includes a pigment. The pigment is not limited, and is appropriately selected according to the intended purpose. Examples of the pigment include at least one selected from the group consisting of a coloring pigment, a scaly pigment, and an extender pigment. In particular, when a scaly pigment is contained, the effect attained by the water-dispersible resin particle according to the present disclosure is readily obtained. This is because the water-dispersible resin particle is less prone to inhibit the orientation of the scaly pigment.

Examples of the scaly pigment include metal flakes, metal oxide flakes, pearl pigments, glass flakes coated with metal or metal oxide, silica flakes coated with metal oxide, graphite, hologram pigments, and cholesteric liquid crystal polymers. These are used singly or two or more of them are used in combination.

The scaly pigment may be colored. Accordingly, the design property is further improved. The scaly pigment may have inorganic coating or organic coating.

Examples of the material of the metal flake include aluminum, chromium, gold, silver, copper, brass, titanium, nickel, nickel chromium, and stainless steel.

Examples of the metal oxide flake include oxides of the aforementioned metals, for example, aluminum oxide and chromium oxide. The pearl pigment is synthetic or natural mica coated with a metal oxide. Examples of the metal oxide include those recited as examples of the material of the metal oxide flake. The pearl pigment is typically natural mica coated with titanium oxide.

The content of the scaly pigment is not limited. The concentration of the scaly pigment, that is, the mass ratio (PWC) of the scaly pigment with respect to the resin solids of the water-borne coating composition may be, for example, 1% by mass or more, and may be 5% by mass or more. The PWC of the scaly pigment may be 40% by mass or less, and may be 30% by mass or less. In one embodiment, the PWC of the scaly pigment is 1% by mass or more and 40% by mass or less. The resin solids of the water-borne coating composition refers to a solid content of all resin components of the water-dispersible resin particle, the coating film-forming resin, the curing agent, and so on.

Examples of the coloring pigment include organic coloring pigments such as azo chelate pigments, insoluble azo pigments, condensed azo pigments, diketopyrrolopyrrole-based pigments, benzimidazolone-based pigments, phthalocyanine-based pigments, indigo pigments, perinone-based pigments, perylene-based pigments, dioxane-based pigments, quinacridone-based pigments, isoindolinone-based pigments, and metal complex pigments; and inorganic coloring pigments such as chrome yellow, yellow iron oxide, red iron oxide, carbon black, and titanium dioxide. These are used singly or two or more of them are used in combination.

The content of the coloring pigment is not limited, and is appropriately set in consideration of the base hiding property. The PWC of the coloring pigment may be, for example, 50% by mass or less, and may be 20% by mass or less. The PWC of the coloring pigment may be 0.1% by mass or more.

Examples of the extender pigment include calcium carbonate, barium sulfate, clay, and talc. These are used singly or two or more of them are used in combination.

The content of the extender pigment is not limited. The PWC of the extender pigment may be 30% by mass or less, and may be 10% by mass or less. The PWC of the extender pigment may be 1% by mass or more.

### (Diluent component)

The water-borne coating composition contains water as a diluent component. The diluent component may further contain an organic solvent.

The diluent component may contain an organic solvent having a solubility in water at 20°C of 0.1% by mass or more and 7% by mass or less (hereinafter, this organic solvent may be referred to as first organic solvent) and an organic solvent having a solubility in water at 20°C of less than 0.1% by mass (hereinafter, this organic solvent may be referred to as second organic solvent) due to the merit that a resulting coating film is readily to have an improved limit of popping and flip-flop property. The solubility in water is the mass expressed in percentage of the organic solvent that uniformly mixes with water when the organic solvent is mixed with water at 20°C.

The content of the first organic solvent may be 0.4% by mass or more, may be 0.8% by mass or more, and may be 1% by mass or more of the water-borne coating composition. The content of the first organic solvent may be 5% by mass or less, may be 4% by mass or less, and may be 3.5% by mass or less of the water-borne coating composition. In one embodiment, the content of the first organic solvent is 0.4% by mass or more and 5% by mass or less of the water-borne coating composition.

The content of the second organic solvent may be 0.05% by mass or more, may be 0.1% by mass or more, and may be 0.5% by mass or more of the water-borne coating composition. The content of the second organic solvent may be 2.5% by mass or less, may be 2% by mass or less, and may be 1.8% by mass or less of the water-borne coating composition. In one embodiment, the content of the second organic solvent is 0.05% by mass or more and 2.5% by mass or less of the water-borne coating composition.

The contents of the first organic solvent and the second organic solvent are calculated on the basis of the water-borne coating composition diluted to a coating viscosity using the diluent component. The coating viscosity is empirically determined in consideration of factors such as a coating method and a coating environment including temperature and humidity. When coating is performed under an environment where the temperature is 15°C or higher and 40°C or lower and the relative humidity is 10% or more and 98% or less, the coating viscosity is generally 20 seconds or more and 90 seconds or less (/ 20°C No. 4 Ford Cup), or 25 seconds or more and 80 seconds or less (/ 20°C No. 4 Ford Cup).

Examples of the first organic solvent include butanol (boiling point: 118°C, solubility: 6.4), isobutyl acetate (boiling point: 118°C, solubility: 0.7%), butyl acetate (boiling point: 126°C, solubility: 2.3%), isoamyl acetate (boiling point: 143°C, solubility: 1.2%), ethylene glycol monohexyl ether (commonly known as "hexylcellosolve", boiling point: 208°C, solubility: 0.99%), diethylene glycol monohexyl ether (boiling point: 259°C, solubility: 1.70%), ethylene glycol 2 ethylhexyl ether (boiling point: 229°C, solubility: 0.20%), diethylene glycol 2 ethylhexyl ether (boiling point: 272°C, solubility: 0.30%), ethylene glycol butyl propylene (boiling point: 170°C, solubility: 6.40%), diethylene glycol butyl propylene (boiling point: 212°C, solubility: 4.80%), propylene glycol butyl ether (boiling point: 170°C, solubility: 6%), dipropylene glycol butyl ether (boiling point: 229°C, solubility: 5%), ethylene glycol monobutyl ether acetate (commonly known as "butycel acetate", boiling point: 191°C, solubility: 1.1%), diethylene glycol monobutyl ether acetate (commonly known as "butyl carbitol acetate", boiling point: 246°C, solubility: 6.5%), methyl methoxybutylacetate (commonly known as "Solfit acetate", boiling point: 188°C, solubility: 6.8%), ethyl ethoxypropionate (commonly known as "EEP", boiling point: 169°C, solubility: 1.6%), nitropropane (boiling point: 122-199°C, solubility: 1.7%), methyl isobutyl ketone (boiling point: 115°C, solubility: 2.0%), methyl amyl ketone (commonly known as "MAK", boiling point: 153°C, solubility: 0.46%), and oxohexyl acetate (commonly known as "OHA", boiling point: 170°C, solubility: 0.27). The solubility described in parentheses indicates the solubility in water (hereinafter, the same applies). These are used singly or two or more of them are used in combination.

The solubility of the first organic solvent in water may be 0.3% or more and 3% or less. The boiling point of the first organic solvent may be 160°C or higher and 280°C or lower.

Examples of the second organic solvent include hydrocarbon-based organic solvents such as n-hexane (boiling point: 67°C), heptane (boiling point: 98°C), cyclohexane (boiling point: 81°C), mineral spirit (boiling point: 140 to 180°C), Swasol 310 (manufactured by Exxon, boiling point: 153 to 177°C, trade name), Shell Sol 70 (manufactured by Showa Shell K.K., boiling point: 143 to 164°C, trade name), Shell Sol 71 (manufactured by Showa Shell K.K., boiling point: 165 to 192°C, trade name), Shell Sol D40 (manufactured by Showa Shell K.K., boiling point: 151 to 188°C, trade name), Shell Sol A (manufactured by Showa Shell K.K., boiling point: 160 to 182°C, trade name), toluene (boiling point: 110°C), xylene (boiling point: 144°C), S-100 (organic solvent manufactured by Esso, boiling point: 158 to 177°C, trade name), and S-150 (organic solvent manufactured by Esso, boiling point: 185 to 211°C, trade name). These are used singly or two or more of them are used in combination.

The boiling point of the second organic solvent may be 145°C or higher and 200°C or lower.

The mixing mass ratio of the first organic solvent to the second organic solvent (= first organic solvent/second organic solvent) is not limited. From the viewpoints of suppression of generation of popping, flip-flop property, and appearance of a resulting coating film, the mixing mass ratio (= first organic solvent/second organic solvent) may be 1/2 or more and 8/1 or less, and may be 1/1 or more and 4/1 or less.

The water-borne coating composition may contain another organic solvent as a dilution medium together with the first organic solvent and the second organic solvent. Such other organic solvent is not limited. As to the organic solvent, a single type thereof is used alone, or two or more types thereof are used in combination.

As said another organic solvent, an ester-based organic solvent may be used. Examples of the ester-based organic solvent include ethyl acetate (boiling point: 77°C, solubility: 7.9%), ethylene glycol monomethyl ether acetate (commonly known as "methycello", boiling point: 145°C, solubility: ∞), ethylene glycol monoethyl ether acetate (commonly known as "celloace"), boiling point: 156°C, solubility: 22.9%), propylene glycol monomethyl ether acetate (commonly known as "PMAC", boiling point: 144°C, solubility: 20.5%), and diethylene glycol monoethyl ether acetate (commonly known as "carbitol acetate", boiling point: 217°C, solubility: ∞).

As said another organic solvent, an ether-based organic solvent may be used. Examples of the ether-based organic solvent include propylene glycol methyl ether (commonly known as "methoxypropanol", boiling point: 119°C, solubility: ∞), propylene glycol ethyl ether (commonly known as "ethoxypropanol", boiling point: 130°C, solubility: ∞), ethylene glycol monoethyl ether (commonly known as "ethycello", boiling point: 136°C, solubility: ∞), methylmethoxybutanol (commonly known as "Solfit", boiling point :174°C, solubility: ∞), ethylene glycol monobutyl ether (commonly known as "butycello", boiling point: 171°C, solubility: ∞), diethylene glycol monoethyl ether (commonly known as "ethylcarbitol", boiling point: 196°C, solubility: ∞), and diethylene glycol monobutyl ether (commonly known as "butylcarbitol", "BDG (manufactured by Nippon Nyukazai Co., Ltd., trade name)", boiling point: 230°C, solubility: ∞).

As said another organic solvent, an alcohol-based organic solvent may be used. Examples of the alcohol-based organic solvent include methanol (boiling point: 65°C, solubility: ∞), ethanol (boiling point: 78°C, solubility: ∞), and propanol (boiling point: 97°C, solubility: ∞).

As said another organic solvent, a ketone-based organic solvent may be used. Examples of the ketone-based organic solvent include acetone (boiling point: 56°C, solubility: ∞) and methyl ethyl ketone (boiling point: 80°C, solubility: 22.6%).

The content of the diluent component is not limited, and may be appropriately set in consideration of the viscosity and the like of the water-borne coating composition. The content of the diluent component may be, for example, 50% by mass or more and 85% by mass of the water-borne coating composition, and may be less and 55% by mass or more and 80% by mass or less.

The overall amount of the organic solvent may be 0.45% by mass or more, and may be 5% by mass or more of the water-borne coating composition. The overall amount of the organic solvent may be 15% by mass or less, and may be 13% by mass or less of the water-borne coating composition.

### (Curing agent)

The water-borne coating composition includes a curing agent. Thereby, the coating film-forming resin is crosslinked, and the durability of a resulting coating film is further improved.

The curing agent is not limited, and is appropriately selected according to the type of the curable functional group of the coating film-forming resin. Examples of the curing agent include an amino resin, a blocked isocyanate resin, an epoxy compound, an aziridine compound, a carbodiimide compound, and an oxazoline compound. These are used singly or two or more of them are used in combination. In particular, the amino resin and the blocked isocyanate resin may be used in terms of various performance and cost of a resulting coating film.

Examples of the amino resin include a water-soluble melamine resin and a water-insoluble melamine resin.

The blocked isocyanate resin can be obtained, for example, by adding a blocking agent having an active hydrogen to a polyisocyanate such as trimethylene diisocyanate, hexamethylene diisocyanate, xylylene diisocyanate, or isophorone diisocyanate. The blocked isocyanate resin, upon heating, dissociates a blocking agent and generates an isocyanate group, and this group reacts with a curable functional group to cure the resin.

The content of the curing agent is, for example, 20 parts by mass or more and 100 parts by mass or less based on 100 parts by mass of the resin solids of the water-borne coating composition.

### (Viscosity agent)

The water-borne coating composition may include a viscosity agent. The viscosity agent makes it easy to form a coating film superior in adhesion by cohering the coating film-forming resin contained in the coating composition. The water-dispersible resin particle contained in the water-borne coating composition hardly affect the action of the viscosity agent.

The viscosity agent is not limited. Examples of the viscosity agent include an inorganic viscosity agent, a cellulose derivative, a urethane associative viscosity agent, a polyamide type viscosity agent, and an alkali-swelling viscosity agent. These are used singly or two or more of them are used in combination.

The inorganic viscosity agent may be a layered material having a laminated structure in which a large number of inorganic crystal layers are stacked. The inorganic viscosity agent having such a layered structure swells in the water-borne coating composition and forms a card house structure in the water-borne coating composition. Therefore, the water-borne coating composition affords a moderate viscosity.

Examples of the shape of the primary particle of the inorganic viscosity agent include a disk shape, a plate shape, a spherical shape, a granular shape, a cubic shape, a needle shape, a rod shape, and an indefinite shape; a disk shape or a plate shape is preferable.

Examples of the inorganic viscosity agent include layered silicates (silicate minerals), halogenated minerals, oxidized minerals, carbonate minerals, borate minerals, sulfate minerals, molybdate minerals, tungstate minerals, phosphate minerals, arsenate minerals, and vanadate minerals. Among them, a layered silicate may be used. When a layered silicate and a hydrophobic associative viscosity agent such as a urethane associative viscosity agent are used in combination, the water resistance of a resulting coating film is readily improved.

Examples of the layered silicate include smectite clay minerals such as hectorite, saponite, stevensite, beidellite, montmorillonite, nontronite, and bentonite, swelling mica clay minerals such as Na-type tetrasilisic fluorine mica, Li-type tetrasilisic fluorine mica, Na-type fluorine teaniolite, and Li-type fluorine teaniolite, vermiculite, kaolinite, and mixtures thereof. These may be either natural products or synthetic products.

Examples of commercially available inorganic viscosity agents include LAPONITE XLG (synthetic hectorite-like substance produced by BYK), LAPONITE RD (synthetic hectorite-like substance produced by BYK), LAPONITE EP (synthetic hectorite-like substance produced by BYK), OPTIGEL WX (Na-substituted bentonite, produced by BYK), THERMABIS (synthetic hectorite-like substance, produced by Henkel Corp.), SMECTONE SA-1 (saponite-like substance produced by Kunimine Industries Co., Ltd.), BENGEL (natural bentonite sold by Hojun Co., Ltd.), Kunipia F (natural montmorillonite sold by Kunimine Industries Co., Ltd.), BEEGUM (natural hectorite produced by Vanderbilt Corporation, USA), DIMONITE (synthetic swellable mica, produced by Topy Industries, Ltd.), SOMASIF (synthetic swellable mica, produced by CO-OP Chemical Co., Ltd.), SWN (synthetic smectite, produced by CO-OP Chemical Co., Ltd.), and SWF (synthetic smectite, produced by CO-OP Chemical Co., Ltd.).

Examples of the cellulose derivative include cellulose acetate butyrate, nitrocellulose, cellulose acetate, and cellulose acetate propionate. Among them, cellulose acetate butyrate may be used. In particular, the cellulose acetate butyrate may be a cellulose acetate butyrate having an acetylation degree of 1% by mass or more and 34% by mass or less and a butyrylation degree of 16% by mass or more and 60% by mass or less as measured by a measurement method described in ASTM-D-817, and a viscosity of 0.005 seconds or more and 20 seconds or less as measured by a measurement method described in ASTM-D-1343. The viscosity as measured by the measurement method described in ASTM-D-1343 may be 0.01 seconds or more and 5 seconds or less.

Examples of the cellulose acetate butyrate include CAB-551-0.01 (viscosity = 0.01 seconds, butyryl group content = 53% by mass), CAB-551-0.2 (viscosity = 0.20 seconds, butyryl group content = 52% by mass), CAB-531-1 (viscosity = 1.90 seconds, butyryl group content = 50% by mass), CAB-500-1 (viscosity = 1.00 seconds, butyryl group content = 51% by mass), CAB-500-5 (viscosity = 5.00 seconds, butyryl group content = 51% by mass), CAB-553-0.4 (viscosity = 0.30 seconds, butyryl group content = 46% by mass), CAB-381-0.1 (viscosity = 0.10 seconds, butyryl group content = 38% by mass), CAB-381-0.5 (viscosity = 0.50 seconds, butyryl group content = 38% by mass), CAB-381-2 (viscosity = 2.00 seconds, butyryl group content = 38% by mass), CAB-321-0.1 (viscosity = 0.10 seconds, butyryl group content = 31.2% by mass), and CAB-171-15S (viscosity = 15.00 seconds, butyryl group content = 17% by mass).

The polyurethane associative viscosity agent is not limited. Examples of the polyurethane associative viscosity agent includes a polyurethane-based viscosity agent having a hydrophobic chain in the molecule and a urethane-urea-based viscosity agent in which at least a part of the main chain is a hydrophobic urethane chain. The polyurethane associative viscosity agent has characteristics that viscosity is readily developed at low shear and viscosity is hardly developed at high shear, and is superior in thixotropic property.

Examples of commercially available polyurethane associative viscosity agent include BYK-425 (urea-modified urethane compound: produced by BYK-Chemie GmbH), BYK-420 (urethane-urea compound: produced by BYK-Chemie GmbH), BYK-430 (amide-urea compound: produced by BYK-Chemie GmbH), PU 1250 (polyurethane polymer, produced by BASF), SN-THICKENER 660T, SN-THICKENER 665T (urethane-based: produced by SAN NOPCO Ltd.), RHEOLATE 216 (urethane-urea compound: produced by ELEMENTIS), PRIMAL RM-12W and PRIMAL RM-895 (urethane type: produced by The Dow Chemical Company).

The polyamide associative viscosity agent is not limited. Examples of commercially available polyamide type viscosity modifiers include BYK-430, BYK-431 (manufactured by BYK-Chemie GmbH), DISPARLON AQ-580, DISPARLON AQ-600, DISPARLON AQ-607 (manufactured by Kusumoto Chemicals, Ltd.), THIXOL W-300 and THIXOL W-400LP (manufactured by Kyoeisha Chemical Co., Ltd.).

Examples of the alkali-swelling viscosity agent include poly(meth)acrylic acid-based viscosity agents. Specific examples thereof include poly(meth)acrylic acid, a poly(meth)acrylic acid-poly(meth)acrylic acid alkyl ester copolymer, a poly(meth)acrylic acid salt, and a hydrophobic group-modified polyacrylic acid. Examples of the poly(meth)acrylic acid salt include sodium poly(meth)acrylate and potassium poly(meth)acrylate. In the hydrophobic group-modified polyacrylic acid, some carboxyl groups are modified with hydrophobic groups such as a styrene group and an alkyl group.

Examples of a commercially available product of the alkali-swelling viscosity agent include Primal ASE-60, Primal ASE-75, Primal ASE-95, Primal ASE-108, Primal TT-615, Primal TT-935, Primal RM-5, Primal RM-7 (all manufactured by Rohm and Haas), Zohgen 100, Zohgen 150, Zohgen 200, Zohgen 250, Zohgen 350 (all manufactured by DKS Co., Ltd.), SN-THICKENER A-815, SN-THICKENER A-818, SN-THICKENER A-850, SN-THICKENER 630, SN-THICKENER 636, SN-THICKENER 640 (all manufactured by San Nopco Ltd.), RHEOVIS CR (manufactured by Ipposha Oil Industries Co., Ltd.), ARON B-300K, ARON B-500, ARON A-7070 (all manufactured by Toagosei Co., Ltd.), THIXOL K-150B (manufactured by Kyoeisha Chemical Co., Ltd.), ACRYSET WR-503A, ACRYSET WR-650 (both manufactured by Nippon Shokubai Co., Ltd.), and Mowinyl LDM7010 (manufactured by The Nippon Synthetic Chemical Industry Co., Ltd.).

The content of the viscosity agent is not limited. The non-volatile content of the viscosity agent may be 0.01% by mass or more, and may be 0.1% by mass or more of the non-volatile content of the water-borne coating composition. The non-volatile content of the viscosity agent may be 20% by mass or less, and may be 10% by mass or less of the non-volatile content of the water-borne coating composition. In one embodiment, the non-volatile content of the viscosity agent is 0.01% by mass or more and 20% by mass or less of the non-volatile content of the water-borne coating composition.

### (Others)

The water-borne coating composition may contain other components, for example, an antifoaming agent, an ultraviolet absorber, a light stabilizer (for example, a hindered amine), an antioxidant, a surface conditioning agent, a film-forming assistant, and a rust inhibitor.

### [Coated article]

The coated article according to the present disclosure includes an article to be coated and a base coating film formed from the water-borne coating composition. The water-borne coating composition includes a water-dispersible resin particle. Therefore, the base coating film formed from this water-borne coating composition is superior in adhesion to an article to be coated.

The base coating film may have one layer or two or more layers. Another coating film (typically, an intermediate coating film) may be interposed between the article to be coated and the base coating film. Another coating film may be interposed between a plurality of base coating films. Still another coating film (typically, a clear coating film) may be formed on the base coating film. The base coating film is superior in adhesion to other coating films.

The base coating film contains the water-dispersible resin particle according to the present disclosure. Therefore, the orientation of the pigment is hardly inhibited, and clear color development and high metallic texture can be obtained.

Hereinafter, a coated article will be described by disclosing some specific embodiments as examples, but the present invention is not limited thereto.

### (1) First Embodiment

The coated article according to the present disclosure includes an article to be coated and a base coating film formed on the article to be coated.

### (2) Second Embodiment

The coated article according to the present disclosure has the same form as that of the first embodiment except that a clear coating film is formed on a base coating film. That is, the coated article includes an article to be coated, a base coating film formed on the article to be coated, and a clear coating film formed on the base coating film.

### (3) Third Embodiment

The coated article according to the present disclosure includes an article to be coated, an intermediate coating film formed on the article to be coated, and a base coating film formed on the intermediate coating film. The coated article according to the present disclosure has the same configuration as that of the first embodiment except that the intermediate coating film is formed between the article to be coated and the base coating film.

### (4) Fourth Embodiment

The coated article according to the present disclosure has the same form as that of the third embodiment except that a clear coating film is formed on a base coating film. That is, the coated article includes an article to be coated, an intermediate coating film formed on the article to be coated, a base coating film formed on the intermediate coating film, and a clear coating film formed on the base coating film.

Hereinafter, each element will be described in detail.

### (Article to be coated)

The material of the article to be coated is not limited. Examples of the material of the article to be coated include metal, resin, and glass.

Examples of the metal include iron, copper, aluminum, tin, zinc, and alloys thereof. Examples of a metallic article to be coated specifically include bodies of automobiles such as passenger cars, trucks, motorcycles, and buses, and parts for automobile bodies.

The metallic article to be coated may have been subjected to surface treatment. Examples of the surface treatment include phosphate salt treatment, chromate treatment, zirconium chemical conversion treatment, and composite oxide treatment. The metallic article to be coated may have been further coated with an electrodeposition coating composition after the surface treatment. The electrodeposition coating composition may be of a cationic type or of an anionic type.

Examples of the resin include polypropylene resin, polycarbonate resin, urethane resin, polyester resin, polystyrene resin, ABS resin, vinyl chloride resin, and polyamide resin. Examples of the resin article to be coated specifically include automobile parts such as spoilers, bumpers, mirror covers, grills, and doorknobs.

The resin article to be coated may have been subjected to degreasing treatment. The resin article to be coated may have been further coated with a primer coating composition after the degreasing treatment. The primer coating composition is not limited, and may be appropriately chosen according to the type of the coating composition to be applied thereon.

### (Base coating film)

The base coating film includes the water-borne coating composition described above. That is, the base coating film includes the water-dispersible resin particle described above, a coating film-forming resin, a curing agent, a pigment, and a diluent component containing water.

The thickness of the base coating film is not limited, and is appropriately set according to the intended purpose. The thickness of the base coating film may be 1 µm or more, may be 10 µm or more, may be 15 µm or more, and may be 20 µm or more. The thickness of the base coating film may be 50 µm or less, may be 45 µm or less, and may be 40 µm or less. In one embodiment, the thickness of the base coating film is 1 µm or more and 50 µm or less. The thickness of the base coating film is measured with, for example, an electromagnetic film thickness meter. The thickness of the base coating film is an average value of the thickness of the base coating film at arbitrary five points. The thicknesses of other coating films are also measured and calculated in the same manner.

The base coating film may have one layer or two or more layers. The coated article may include, for example, an article to be coated, a first base coating film formed on the article to be coated, and a second base coating film. Each base coating film is not limited as long as it includes the water-dispersible resin particle described above, a coating film-forming resin, a curing agent, a pigment, and a diluent component containing water. The components contained in the respective base coating films may be either the same or different.

The first base coating film may be a colored coating film containing a coloring pigment. The second base coating film may be a luster coating film containing a scaly pigment. Alternatively, the first base coating film may be a luster coating film containing a scaly pigment. The second base coating film may be a colored coating film containing a coloring pigment. The luster coating film may further contain a coloring pigment. The colored coating film and/or the luster coating film may further contain an extender pigment.

### (Intermediate coating film)

The intermediate coating film is interposed between an article to be coated and a base coating film. The intermediate coating film makes the coating surface uniform, and the unevenness of the base coating film is easily controlled. The intermediate coating film includes a water-borne intermediate coating composition free of the water-dispersible resin particle according to the present disclosure. The water-borne intermediate coating composition includes, for example, a coating film-forming resin, a curing agent, a pigment, a viscosity agent, and a diluent component containing water. The water-borne intermediate coating composition may contain various additives, as necessary. Examples of the additive include an ultraviolet absorber, an antioxidant, an antifoaming agent, a surface conditioning agent, and a pinhole inhibitor.

Examples of the coating film-forming resin include those recited as examples of the coating film-forming resin to be blended in the water-borne coating composition according to the present disclosure. In particular, the intermediate coating film may include an acrylic resin and a polyester resin as the coating film-forming resin. The mass ratio of the acrylic resin to the polyester resin (= acrylic resin/polyester resin) may be 7/1 to 0.5/1, and may be 6/1 to 1/1.

Examples of the curing agent include those recited as examples of the curing agent to be blended in the water-borne coating composition according to the present disclosure. Examples of the pigment include those recited as examples of the pigment to be blended in the water-borne coating composition according to the present disclosure. Examples of the viscosity agent include those recited as examples of the viscosity agent to be blended in the water-borne coating composition according to the present disclosure. Examples of the diluent component include those recited as examples of the diluent component to be blended in the water-borne coating composition according to the present disclosure.

The thickness of the intermediate coating film is not limited. In terms of the appearance and chipping resistance of the coated article, the thickness of the intermediate coating film may be 10 µm or more, and may be 15 µm or more. The thickness of the intermediate coating film may be 40 µm or less, and may be 30 µm or less. In one embodiment, the intermediate coating film has a thickness of 10 µm or more and 40 µm or less.

### (Clear coating film)

One or more other coating films may be further formed on the base coating film. Examples of the other coating film include a clear coating film.

The clear coating film improves the gloss of the coated article and prevents the pigment blended in the underlying layer from falling off and jumping out. The clear coating film is not limited, and has the same configuration as that of a conventionally known clear coating film.

The clear coating film includes a clear composition free of the water-dispersible resin particle according to the present disclosure. The clear composition includes, for example, a coating film-forming resin and a curing agent. The clear composition contains a diluent component, as necessary. The clear composition may contain various additives recited above, as necessary.

Examples of the coating film-forming resin include those recited as examples of the coating film-forming resin to be blended in the water-borne coating composition. Examples of the curing agent include those recited as examples of the curing agent to be blended in the water-borne coating composition.

The clear coating film may include a pigment as long as transparency is not impaired. The pigment is not limited, and conventionally publicly-known pigments may be used singly or two or more of them may be used in combination. The content of the pigment added is not limited. The amount of the pigment added is, for example, 30 parts by mass or less based on 100 parts by mass of the non-volatile content of the coating film-forming resin, and may be 0.01 parts by mass or more and 10 parts by mass or less.

The thickness of the clear coating film is not limited. From the viewpoint of scratch resistance and appearance, the thickness of the clear coating film may be 15 µm or more, and may be 25 µm or more. The thickness of the clear coating film may be 60 µm or less, and may be 50 µm or less. In one embodiment, the thickness of the clear coating film is 15 µm or more and 60 µm or less.

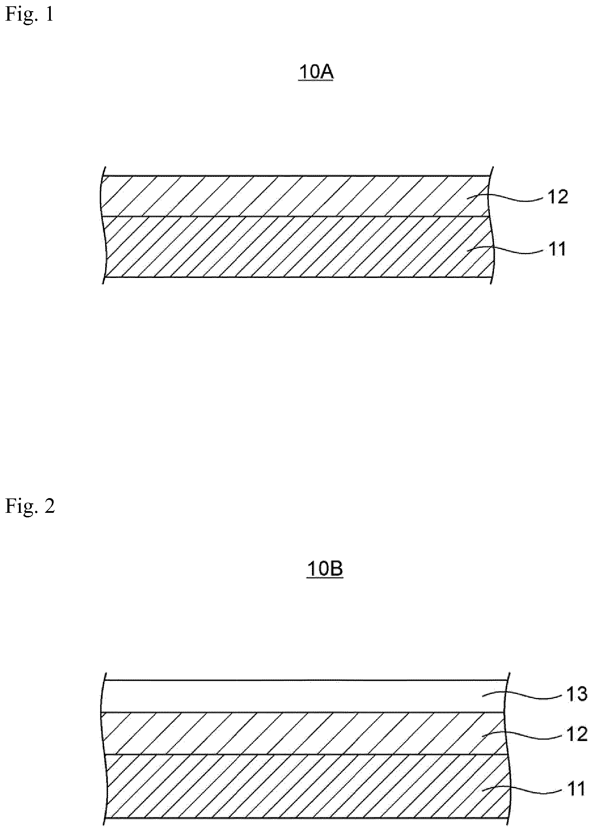

Fig. 1 is a sectional view schematically illustrating a coated article according to the first embodiment. The coated article 10A according to the first embodiment includes an article 11 to be coated and a base coating film 12 formed on the article 11 to be coated.

Fig. 2 is a sectional view schematically illustrating a coated article according to the second embodiment. The coated article 10B according to the second embodiment includes an article 11 to be coated, a base coating film 12 formed on the article 11 to be coated, and a clear coating film 13 formed on the base coating film 12.

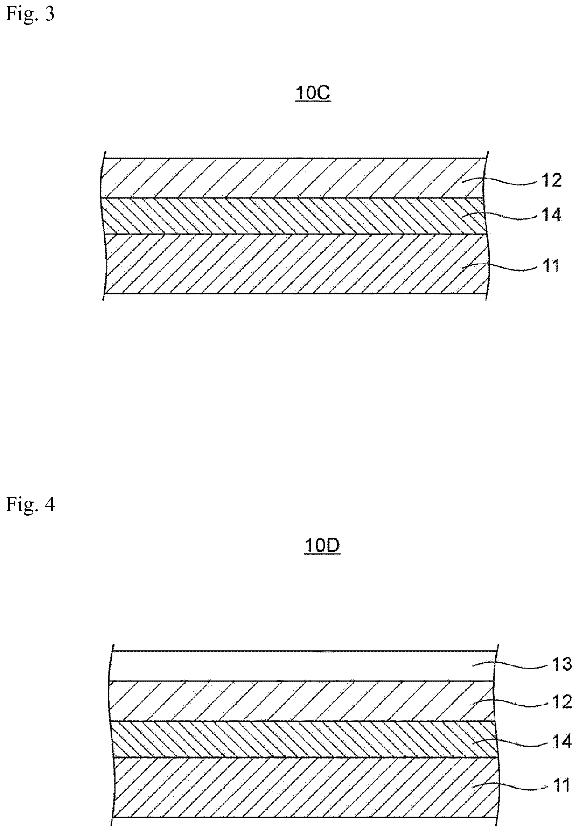

Fig. 3 is a sectional view schematically illustrating a coated article according to the third embodiment. The coated article 10C according to the third embodiment includes an article 11 to be coated, an intermediate coating film 14 formed on the article 11 to be coated, and a base coating film 12 formed on the intermediate coating film 14.

Fig. 4 is a sectional view schematically illustrating a coated article according to the fourth embodiment. The coated article 10D according to the fourth embodiment includes an article 11 to be coated, an intermediate coating film 14 formed on the article 11 to be coated, a base coating film 12 formed on the intermediate coating film 14, and a clear coating film 13 formed on the base coating film 12.

### [Method for producing coated article]

A method for producing coated article includes at least applying a basecoat composition including the water-borne coating composition to an article to be coated to form an uncured base coating film, and curing the uncured base coating film.

Before forming the uncured base coating film, an intermediate coating film may be formed on the article to be coated. When the base coating film is formed, the intermediate coating film may have been either cured or uncured. After the uncured base coating film is formed, a clear coating film may be formed on the article to be coated. When the clear coating film is formed, the base coating film may have been either cured or uncured. In particular, from the viewpoint of productivity, adherability, and water resistance, it is preferable that coating films are formed in layers without being cured (so-called wet-on-wet application), and then the three uncured coating films are simultaneously cured.

Hereinafter, a method for producing a coated article will be described by disclosing some specific embodiments as examples, but the present invention is not limited thereto.

### (a) First Embodiment

The method for producing a coated article according to the present disclosure includes: applying a basecoat composition onto an article to be coated to form an uncured base coating film; and curing the uncured base coating film. The basecoat composition includes the water-borne coating composition described above.

### (b) Second Embodiment

The method for producing a coated article according to the present disclosure is the same as that of the first embodiment except that this method further includes applying a clear coating composition to form an uncured clear coating film and curing the uncured clear coating film.

The uncured clear coating film may be formed on the uncured base coating film or may be formed on the cured base coating film. In particular, the former method is preferable. In the former method, the curing step is performed after the step of forming an uncured clear coating film. In the curing step, the uncured clear coating film is cured together with the uncured base coating film.

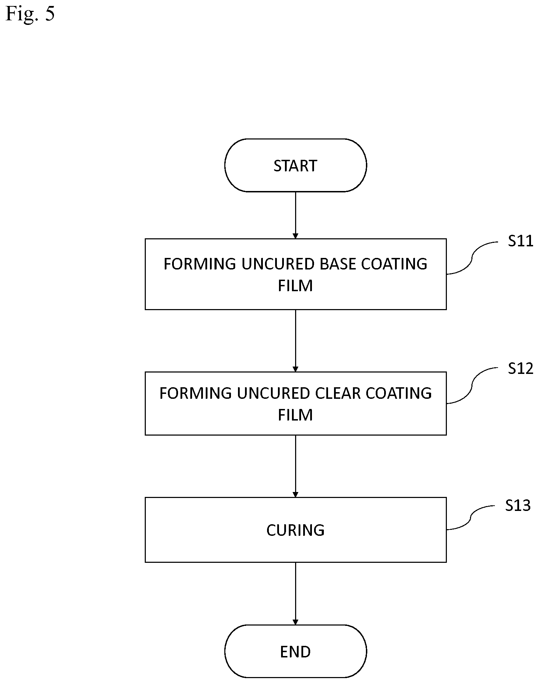

Fig. 5 is a flowchart of the method for producing a coated article according to the present disclosure. In the illustrated example, the curing step (S13) is performed after the step of forming an uncured base coating film (S11) and the step of forming an uncured clear coating film (S12).

### (c) Third Embodiment

The method for producing a coated article according to the present disclosure includes: applying an intermediate coating composition onto an article to be coated to form an uncured intermediate coating film, applying a basecoat composition to form an uncured base coating film, and curing the respective uncured coating films.

The uncured base coating film is formed on the uncured intermediate coating film. The curing step is performed after the step of forming the uncured base coating film. In the curing step, the uncured base coating film is cured together with the uncured intermediate coating film.

### (d) Fourth Embodiment

The method for producing a coated article according to the present disclosure is the same as that of the third embodiment except that this method further includes applying a clear coating composition to form an uncured clear coating film and curing the uncured clear coating film.

The uncured clear coating film may be formed on the uncured base coating film or may be formed on the cured base coating film. In particular, the former method is preferable. In the former method, the curing step is performed after the step of forming an uncured clear coating film. In the curing step, the uncured intermediate coating film, the uncured base coating film, and the uncured clear coating film are cured. Hereinafter, a method of curing three uncured coating films at one time is referred to as 3WET method.

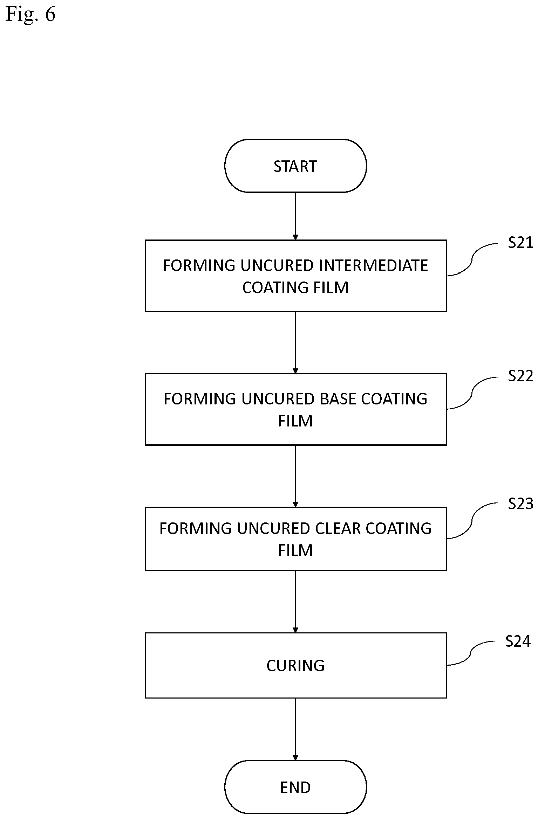

Fig. 6 is a flowchart of the method for producing a coated article according to the present disclosure using the 3WET method. In the illustrated example, the curing step (S24) is performed after the step of forming an uncured intermediate coating film (S21), the step of forming an uncured base coating film (S22), and the step of forming an uncured clear coating film (S23).

### (e) Fifth Embodiment

The method for producing a coated article according to the present disclosure includes: applying an intermediate coating composition onto an article to be coated to form an uncured intermediate coating film; first curing the uncured intermediate coating film; applying a basecoat composition onto the cured intermediate coating film to form an uncured base coating film; and second curing the uncured base coating film.

The uncured base coating film is formed on the cured intermediate coating film. The curing steps are performed before and after the step of forming an uncured base coating film, respectively. In the curing steps, the uncured intermediate coating film and the uncured base coating film are cured, respectively.

### (f) Sixth Embodiment

The method for producing a coated article according to the present disclosure is the same as that of the fifth embodiment except that this method further includes applying a clear coating composition to form an uncured clear coating film and curing the uncured clear coating film.

The uncured clear coating film may be formed on the uncured base coating film or may be formed on the cured base coating film. In particular, the former method is preferable. In the former method, the second curing step is performed after the step of forming an uncured clear coating film. In the second curing step, the uncured base coating film and the uncured clear coating film are cured. Hereinafter, a method of curing the intermediate coating film, then forming an uncured base coating film and a clear coating film, and then curing the two uncured coating films at one time is referred to as 2C1B method.

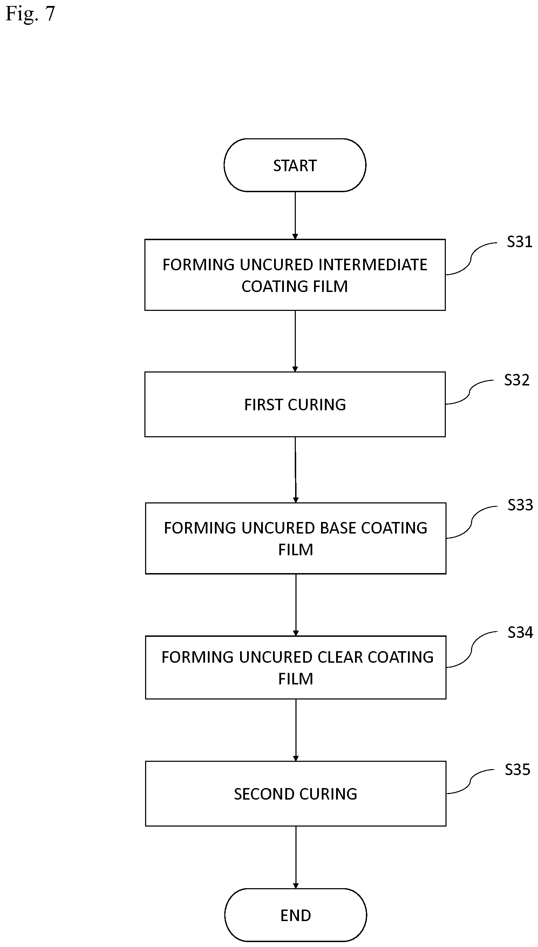

Fig. 7 is a flowchart of the method for producing a coated article according to the present disclosure using the 2C1B method. In the illustrated example, after the step of forming an uncured intermediate coating film (S31), the first curing step (S32) is performed, subsequently, the step of forming an uncured base coating film (S33) and the step of forming an uncured clear coating film (S34) are performed, and finally, the second curing step (S35) is performed.

Hereinafter, each step will be described in detail.

### (I) Step of forming uncured base coating film

The uncured base coating film is formed by applying a basecoat composition including the water-borne coating composition described above to an object. The object may be an article to be coated, and may be an uncured intermediate coating film, and also may be a cured intermediate coating film.

The applying method is not limited. Examples of the applying method include air spray coating, airless spray coating, rotary atomization coating, and curtain coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "micro micro bell (µµ bell)", "micro bell (µ bell)", "metallic bell", or the like is used.

The application amount of the basecoat composition is not limited. The basecoat composition is applied, for example, such that the thickness of the base coating film after curing is 15 µm or more and 50 µm or less.

After the basecoat composition is applied, preliminary drying (also referred to as preheating) may be carried out. As a result, the diluent component contained in the base coating film is inhibited from bumping in the curing step, so that the occurrence of popping is readily controlled. Further, the preliminary drying inhibits the mixing of the uncured base coating film and another coating composition, so that a mixed layer is hardly formed. Therefore, the appearance of a resulting coated article is likely to be improved.

Conditions for the preliminary drying are not limited. Examples of the preliminary drying include a method in which the item to be dried is left standing for 15 minutes or more and 30 minutes or less under a temperature condition of 20°C or more and 25°C or less, and a method in which the item to be dried is heated for 30 seconds or more and 10 minutes or less under a temperature condition of 50°C or more and 100°C or less.

### (Basecoat composition)

The basecoat composition includes the water-borne coating composition described above. The basecoat composition may be prepared by further diluting the water-borne coating composition with a diluent component. The basecoat composition may be either a one-pack coating composition or a multi-pack coating composition such as a two-pack coating composition.

The method for producing the basecoat composition is not limited, and methods known in the art such as stirring, kneading, or dispersing the above-described materials using a disper, a homogenizer, a roll, a sand grinding mill, a kneader, or the like can be used.

The viscosity of the basecoat composition is not limited. The viscosity of the basecoat composition measured with a B-type viscometer at 20°C is, for example, 500 cps/6 rpm or more and 12,000 s/6 rpm or less. The viscosity of the basecoat composition may be 10,000 s/6rpm or less, and may be 6,000 cps/6rpm or less.

The non-volatile content of the basecoat composition may be 5% by mass or more, may be 15% by mass or more, and may be 20% by mass or more. The non-volatile content of the basecoat composition may be 50% by mass or less, may be 45% by mass or less, and may be 40% by mass or less. In one embodiment, the non-volatile content of the basecoat composition is 5% by mass or more and 50% by mass or less. The non-volatile content of the basecoat composition refers to all components of the basecoat composition excluding the diluent component.

### (II) Step of forming uncured intermediate coating film

The uncured intermediate coating film is formed by applying an intermediate coating composition including the water-borne intermediate coating composition described above to an object. The object is an article to be coated.

The applying method is not limited. Examples of the applying method include the same methods as the methods of applying the basecoat composition. Among them, rotary atomization type electrostatic coating is preferable from the viewpoint of coating efficiency.

The application amount of the intermediate coating composition is not limited. The intermediate coating composition is applied, for example, such that the thickness of the intermediate coating film after curing is 10 µm or more and 40 µm or less.

After the intermediate coating composition is applied, preliminary drying may be carried out. The conditions for the preliminary drying are not limited, and may be the same as those for the preliminary drying of the base coating film.

### (Intermediate coating composition)

The intermediate coating composition includes the water-borne intermediate coating composition described above. The intermediate coating composition may be prepared by further diluting the water-borne intermediate coating composition with a diluent component. The intermediate coating composition may be either a one-pack coating composition or a multi-pack coating composition such as a two-pack coating composition.

The method for producing the intermediate coating composition is not limited, and examples thereof include the same method as the method for applying the basecoat composition.

The viscosity of the intermediate coating composition is not limited. The viscosity of the intermediate coating composition measured with a B-type viscometer at 20°C is, for example, 500 cps/6 rpm or more and 6,000 cps/6 rpm or less.

The non-volatile content of the intermediate coating composition is, for example, 30% by mass or more and 70% by mass or less. The non-volatile content of the intermediate coating composition refers to all components of the intermediate coating composition excluding the diluent component.

### (III) Step of forming uncured clear coating film

The uncured clear coating film is formed by applying a clear coating composition including the clear composition described above to an object. The object is an uncured or cured base coating film.

The applying method is not limited. Examples of the applying method include the same methods as the methods of applying the basecoat composition. Among them, rotary atomization type electrostatic coating is preferable from the viewpoint of coating efficiency.

The application amount of the clear coating composition is not limited. The clear coating composition is applied, for example, such that the thickness of the clear coating film after curing is 15 µm or more and 60 µm or less.

After applying the clear coating composition, preliminary drying may be carried out. The conditions for the preliminary drying are not limited, and may be the same as those for the preliminary drying of the base coating film.

### (Clear coating composition)

The clear coating composition includes the clear composition described above. The form of the clear coating composition is not limited. Further, the form of the clear coating composition may be any of an organic solvent type, a water-borne type (water-soluble, water-dispersible, emulsion), a non-aqueous dispersion type, and a powder type.

The method for producing the clear coating composition is not limited, and examples thereof include the same method as the method for applying the basecoat composition.

The viscosity of the organic solvent type or aqueous type clear coating composition is not limited. The viscosity of the clear coating composition measured using a No 4 Ford Cup at 20°C in accordance with "3. Flow Cup Method" of JIS K 5600-2-2: 1999 is, for example, 20 seconds or more and 30 seconds or less.

The non-volatile content of the organic solvent type or aqueous type clear coating composition is, for example, 30% by mass or more and 70% by mass or less. The non-volatile content of the clear coating composition refers to all components of the clear coating composition excluding the diluent component.

The organic solvent type clear coating composition may include, as a coating film-forming resin, a combination of an acrylic resin and/or a polyester resin with an amino resin and/or an isocyanate, an acrylic resin and/or a polyester resin having a carboxylic acid/epoxy curing system, or the like. Accordingly, transparency or acid etching resistance is easily improved.

The water-borne clear coating composition may include, as a coating film-forming resin, a resin obtained by neutralizing the coating film-forming resin contained in an organic solvent type clear coating composition with a base to make the coating film-forming resin aqueous. The neutralization may be carried out before or after polymerization by adding a tertiary amine such as dimethylethanolamine and triethylamine.

The powder type clear coating composition may include an epoxy resin, an acrylic resin, and a polyester resin as a coating film-forming resin. In particular, an acrylic resin may be used due to the merit that the weather resistance of a coating film is readily improved.

### (V) Curing step (first and second curing steps)

The respective uncured coating films are cured. Each coating film can be cured by heating. A curing step may be carried out every time when an uncured coating film is formed, or a plurality of uncured coating films may be formed and then cured at one time in a single step.

The heating conditions are appropriately set according to the composition and the like of the respective coating films. The heating temperature is, for example, 110°C or higher and 180°C or lower, and may be 120°C or higher and 160°C or lower. The heating time may be appropriately set according to the heating temperature. When the heating temperature is 120°C or higher and 160°C or lower, the heating time is, for example, 10 minutes or more and 60 minutes or less, and may be 20 minutes or more and 30 minutes or less.

Examples of the heating device include a drying furnace using a heating source such as hot air, electricity, gas, or infrared rays. Using a drying furnace in which two or more of these heating sources are used in combination shorten the drying time.

### EXAMPLES

Hereafter, the present invention will be described in detail by way of examples, but the present invention is not limited by the examples at all. In the examples, "parts" and "%" are on a mass basis unless otherwise indicated.

### [Example 1]

A reaction vessel was charged with 104 parts of deionized water and 0.12 parts of an emulsifier, and the temperature was raised to 80°C with mixing and stirring in a nitrogen stream. Subsequently, a monomer emulsion Y-1 composed of acrylamide (AAm), styrene (ST), methyl methacrylate (MMA), t-butyl methacrylate (TBMA), methacrylic acid (MAA), an emulsifier, and deionized water, and a polymerization initiator solution Z-1 composed of ammonium persulfate and deionized water were added at one time to a reaction vessel, and the mixture was held at that temperature for 30 minutes. Thereafter, a monomer emulsion Y-2 composed of acrylamide (AAm), styrene (ST), methyl methacrylate (MMA), tert-butyl methacrylate (TBMA), methacrylic acid (MAA), an emulsifier, and deionized water and a polymerization initiator solution Z-2 composed of ammonium persulfate and deionized water were added dropwise to the reaction vessel over 120 minutes. After the completion of the dropping, aging was carried out at the same temperature for 1 hour. The amounts of the respective materials used are as shown in Table 1.

Next, the reaction liquid obtained was cooled to 30°C, neutralized with dimethylethanolamine (DMEA), added with 35 parts of deionized water, and aged at that temperature for additional one hour. Finally, this reaction liquid was filtered through a 200 mesh filter, affording a water-dispersible resin particle A1. The water-dispersible resin particle A1 had an acid value of 30 mg KOH/g, a hydroxyl value of 0 mg KOH/g, and a non-volatile content of 30%.

### [Example 2, Comparative Examples 1 and 2]

Water-dispersible resin particles A2, B1 and B2 were obtained in the same manner as in Example 1 except that the types and amounts of the starting monomers and the like were changed as shown in Table 1. In Table 1, HEMA represents hydroxyethyl methacrylate.

**[Table 1]**

| | | Example 1 | Example 2 | Comparative Example 1 | Comparative Example 2 |
|---|---|---|---|---|---|
| Water-dispersible resin particles | | A1 | A2 | B1 | B2 |
| Monomer emulsion (Y-1) | ST | 4.00 | 4.00 | 4.00 | 4.00 |
| | TBMA | 4.04 | 4.54 | 3.81 | 5.04 |
| | MAA | 0.46 | 0.46 | 0.46 | 0.46 |
| | MMA | 0.50 | 0.50 | 0.50 | 0.50 |
| | HEMA | | | 0.23 | |
| | AAm | 1.00 | 0.50 | 1.00 | |
| | Deionized water | 9.00 | 9.00 | 9.00 | 9.00 |
| | Emulsifier | 0.02 | 0.02 | 0.02 | 0.02 |
| Polymerization initiator solution (Z-1) | Ammonium persulfate | 0.05 | 0.05 | 0.05 | 0.05 |
| | Deionized water | 0.50 | 0.50 | 0.50 | 0.50 |
| Monomer emulsion (Y-2) | ST | 36.00 | 36.00 | 36.00 | 36.00 |
| | TBMA | 36.36 | 40.86 | 34.27 | 45.36 |
| | MAA | 4.14 | 4.14 | 4.14 | 4.14 |
| | MMA | 4.50 | 4.50 | 4.50 | 4.50 |
| | HEMA | | | 2.09 | |
| | AAm | 9.00 | 4.50 | 9.00 | |
| | Deionized water | 81.00 | 81.00 | 81.00 | 81.00 |
| | Emulsifier | 0.22 | 0.22 | 0.22 | 0.22 |
| Polymerization initiator solution (Z-2) | Ammonium persulfate | 0.45 | 0.45 | 0.45 | 0.45 |
| | Deionized water | 4.50 | 4.50 | 4.50 | 4.50 |
| Hydroxyl value (mgKOH/g) | | 0 | 0 | 10 | 0 |
| Acid value (mg KOH/g) | | 30 | 30 | 30 | 30 |
| Non-volatile content (%) | | 30 | 30 | 30 | 30 |

### [Examples 3 to 8, Comparative Examples 3 to 7]

Water-borne basecoat compositions X1 to X6 and Y1 to Y5 were prepared by using the water-dispersible resin particles A1, A2, B1, and B2, and blending and stirring the starting materials at the composition given in Table 2. The unit of the composition in Table 2 is part(s) by mass. The non-volatile content is described in part(s) by mass excluding the organic solvent and water.

**[Table 2]**

| | | Example | | | | | | Comparative Example | | | | |
|---|---|---|---|---|---|---|---|---|---|---|---|---|
| | | 3 | 4 | 5 | 6 | 7 | 8 | 3 | 4 | 5 | 6 | 7 |
| Water-borne basecoat composition | | X1 | X2 | X3 | X4 | X5 | X6 | Y1 | Y2 | Y3 | Y4 | Y5 |
| Water-dispersible resin particles | A1 | 10 | | 20 | 1 | 10 | 10 | | | | | |
| | A2 | | 10 | | | | | | | | | |
| | B1 | | | | | | | | 10 | | | |
| | B2 | | | | | | | | | 10 | | |
| Coating film-forming resin | Acrylic emulsion | 50 | 50 | 50 | 50 | 50 | 50 | 50 | 50 | 50 | 50 | 50 |
| | Water-soluble acrylic resin | 10 | 10 | 10 | 10 | 10 | 10 | 10 | 10 | 10 | 10 | 10 |
| | Polyether polyol | 10 | 10 | 10 | 10 | 10 | 10 | 10 | 10 | 10 | 10 | 10 |
| | Urethane emulsion resin | 10 | 10 | 10 | 10 | 10 | 10 | 10 | 10 | 10 | 10 | 10 |
| Curing agent | Melamine resin | 20 | 20 | 20 | 20 | 20 | 20 | 20 | 20 | 20 | 20 | 20 |
| Scaly pigment | Aluminum | 10 | 10 | 10 | 10 | | | 10 | 10 | 10 | | |
| Scaly pigment | Mica | | | | | 10 | 10 | | | | 10 | 10 |
| Coloring pigment | Red pigment (quinacridone) | | | | | | 10 | | | | | 10 |
| First organic solvent (parts) | Hexylcellosolve | 2 | 2 | 2 | 2 | 2 | 2 | 2 | 2 | 2 | 2 | 2 |
| Second organic solvent (parts) | Shell Sol 71 | 1.5 | 1.5 | 1.5 | 1.5 | 1.5 | 1.5 | 1.5 | 1.5 | 1.5 | 1.5 | 1.5 |

The starting materials in Table 2 will be described.
- Acrylic resin emulsion: average particle size: 150 nm, nonvolatile content: 20%, solid acid value: 20 mg KOH/g, solid hydroxyl value: 40 mg KOH/g
- Water-soluble acrylic resin: nonvolatile content: 30%, solid acid value: 40 mg KOH/g, solid hydroxyl value: 50 mg KOH/g
- Polyether polyol: PRIMEPOL PX-1000 manufactured by Sanyo Chemical Industries, Ltd., bifunctional polyether polyol, nonvolatile content: 100%
- Urethane resin emulsion: NeoRez R-9603 manufactured by Covestro Coating Resins, nonvolatile content: 33%
- Melamine resin: CYMEL 204, manufactured by Allnex, mixed alkylated melamine resin, nonvolatile content: 80%
- Scaly pigment: aluminum, manufactured by Asahi Kasei Corporation, trade name: Aluminium Paste MH-8801
- Scaly pigment: mica, manufactured by Merck & Co., Inc., trade name: XIRALLIC T60-10 WNT CRYSTAL SILVER
- Coloring pigment: quinacridone (red pigment), manufactured by DIC Corporation, trade name: FASTOGEN SUPER RED 400RG
- First organic solvent: Hexylcellosolve, boiling point: 208°C, solubility: 0.99%
- Second organic solvent: Shell Sol 71, manufactured by Showa Shell K.K., boiling point: 165 to 192°C

### [Examples 9 to 14, Comparative Examples 8 to 12]

Using water-borne basecoat compositions X1 to X6 and Y1 to Y5, coated articles having a multilayer coating film were manufactured by the 3WET method as follows.

### (1) Preparation of article to be coated

An SPCC-SD steel sheet (dull steel sheet, article to be coated) treated with zinc phosphate and measuring 70 mm by 150 mm by 0.8 mm thick was subjected to electrodeposition coating with a cationic electrodeposition coating composition "Power Top U-50" manufactured by Nippon Paint Automotive Coatings Co., Ltd. such that the dry coating film would be 20 µm in thickness. Then, the electrodeposition coating film was baked at 160°C for 30 minutes.

### (2) Formation of uncured intermediate coating film

An intermediate coating composition "AQUAREX AR-620" (manufactured by Nippon Paint Automotive Coatings Co., Ltd.) was electrostatically applied onto the electrodeposition-coated steel sheet with a Cartridge Bell (rotary atomizing coater manufactured by ABB Industries). Then, preheating was performed at 80°C for 5 minutes, affording an uncured intermediate coating film having a thickness of 20 µm after curing.

### (3) Formation of uncured base coating film

A water-borne basecoat composition was electrostatically applied onto the uncured intermediate coating film using a Cartridge Bell. Then, preheating was performed at 80°C for 5 minutes, affording an uncured base coating film having a thickness of 15 µm after curing.

### (4) Formation of uncured clear coating film

A clear coating composition "MACFLOW 0-1860 Clear" (acid epoxy curable clear coating composition manufactured by Nippon Paint Automotive Coatings Co., Ltd.) was electrostatically applied onto the uncured base coating film using a rotary atomization type electrostatic coating machine. Next, setting was performed for 7 minutes, affording an uncured clear coating film having a thickness of 35 µm after curing.

### (5) Curing of coating film

The uncured intermediate coating film, the uncured base coating film, and the uncured clear coating film were heated and cured at 140°C for 30 minutes, affording a coated article.

### [Examples 15 to 20, Comparative Examples 13 to 17]

Using water-borne basecoat compositions X1 to X6 and Y1 to Y5, coated articles having a multilayer coating film were manufactured by the 2C1B method as follows.

### (1) Preparation of article to be coated

An electrodeposition-coated steel sheet (article to be coated) was prepared in the same manner as in Example 9.

### (2) Formation of cured intermediate coating film

An intermediate coating composition (a gray intermediate coating composition "ORGA P-30" (polyester melamine-based coating composition, manufactured by Nippon Paint Co., Ltd.), which had been diluted such that the viscosity thereof would be 25 seconds (measured at 20°C using a No. 4 Ford Cup)) or "AQUAREX AR-620" (manufactured by Nippon Paint Automotive Coatings Co., Ltd.) was electrostatically applied onto the electrodeposition-coated steel sheet with a Cartridge Bell (rotary atomizing coater manufactured by ABB Industries). Then, baking was performed at 140°C for 30 minutes, affording a cured intermediate coating film having a thickness of 35 µm.

### (3) Formation of uncured base coating film

An uncured base coating film having a thickness of 15 µm after curing was formed on the cured intermediate coating film in the same manner as in Example 9.

### (4) Formation of uncured clear coating film

An uncured clear coating film having a thickness of 35 µm after curing was formed on the uncured base coating film in the same manner as in Example 9.

### (5) Curing of coating film

The uncured base coating film and the uncured clear coating film were heated and cured at 140°C for 30 minutes, affording a coated article.

### [Evaluation]

The coated articles obtained were evaluated for FF resistance, water resistance, and pressure-water jetting test in the following manner. The results are shown in Tables 3 and 4.

### (FF property)

L values were measured at measurement angles of 25 degrees and 75 degrees using "CM-512m3" (multi-angle spectrophotometer manufactured by KONICA MINOLTA, INC.), and then an FF value (L value at 25 degrees/L value at 75 degrees) was calculated. The larger the FF value, the better the design property.

The evaluation criteria are as follows, and Best and Good were regarded as pass and Poor was regarded as fail.
Best: The FF value is 2.3 or more.
Good: The FF value is 2.0 or more and less than 2.3.
Poor: The FF value is less than 2.0.

### (Water resistance)

A test piece cut out from a coated article was immersed in water at 40°C for 240 hours, and then 10 slits were made in each of the longitudinal and lateral directions at an interval of 1 mm with a utility knife on the multilayer coating film of the test piece, and thus 100 squares were prepared. A cellophane tape (registered trademark, manufactured by Nichiban Co., Ltd.) was attached onto the 100 squares and then peeled off, and the number of remaining squares was counted. The larger the number of remaining squares, the higher the water resistance (adhesion), and the better the resistance.

The evaluation criteria are as follows, and Good was regarded as pass and Poor was regarded as fail.
Good: There is no peel-off of squares.
Poor: Squares were peeled off.

### (Pressure-water jetting test)

After high-pressure car washing was performed by a method in accordance with DIN (German Industrial Standard) 55662, the appearance of a coating film was visually evaluated.

The evaluation criteria are as follows, and Good and Fair were regarded as pass and Poor was regarded as fail.
Good: No abnormalities
Fair: Damaged
Poor: Delamination occurred in the coating film.

**[Table 3]**

| | Example | | | | | | Comparative Example | | | | |
|---|---|---|---|---|---|---|---|---|---|---|---|
| | 9 | 10 | 11 | 12 | 13 | 14 | 8 | 9 | 10 | 11 | 12 |
| Water-dispersible resin particles | A1 | A2 | A1 | A1 | A1 | A1 | | B1 | B2 | | |
| Water-borne basecoat composition | X1 | X2 | X3 | X4 | X5 | X6 | Y1 | Y2 | Y3 | Y4 | Y5 |
| FF property | Best | Best | Good | Best | Best | Best | Best | Poor | Best | Best | Best |
| Adhesion | Good | Good | Good | Good | Good | Good | Good | Good | Good | Good | Poor |
| Pressure-water jetting test | Good | Good | Good | Fair | Good | Good | Poor | Good | Poor | Poor | Poor |

**[Table 4]**

| | Example | | | | | | Comparative Example | | | | |
|---|---|---|---|---|---|---|---|---|---|---|---|
| | 15 | 16 | 17 | 18 | 19 | 20 | 13 | 14 | 15 | 16 | 17 |
| Water-dispersible resin particles | A1 | A2 | A1 | A1 | A1 | A1 | | B1 | B2 | | |
| Water-borne basecoat composition | X1 | X2 | X3 | X4 | X5 | X6 | Y1 | Y2 | Y3 | Y4 | Y5 |
| FF property | Best | Best | Good | Best | Best | Best | Best | Poor | Best | Best | Best |
| Adhesion | Good | Good | Good | Good | Good | Good | Good | Good | Good | Good | Poor |
| Pressure-water jetting test | Good | Good | Good | Fair | Good | Good | Poor | Good | Poor | Poor | Poor |

The coated articles of Examples 9 to 14 and Example 15 to 20 satisfying the requirements prescribed in the embodiments of the present invention each include a multilayer coating film superior in design property and adhesion regardless of the producing method.

On the other hand, in each of Comparative Examples 8 and 13, since the water-borne coating composition contained no water-dispersible resin particle, the pressure-water jetting test was low and the adhesion was poor.

In each of Comparative Examples 9 and 14, since the hydroxyl value of the resin in the water-dispersible resin particle contained in the water-borne basecoat composition was as high as 10 mg KOH/g, the FF property was low and the design property was poor.

In each of Comparative Examples 10 and 15, since the resin in the water-dispersible resin particle contained in the water-borne basecoat composition contained no amide groups, the pressure-water jetting test was low and the adhesion was poor.

Comparative Examples 11 and 16 are examples in which the aluminum in Comparative Examples 8 and 13 was changed to mica, but similarly, since the water-borne coating composition contained no water-dispersible resin particle, the pressure-water jetting test was low and the adhesion was poor.

Comparative Examples 12 and 17 are examples in which the aluminum in Comparative Examples 8 and 13 was changed to mica and quinacridone was added, but similarly, since the water-borne coating composition contained no water-dispersible resin particle, the water resistance and the pressure-water jetting test were low, and the adhesion was poor.

The present disclosure includes the following embodiments.
[1] A water-dispersible resin particle comprising a constitutional unit derived from a monomer having one or more amide groups,
   wherein a content of the constitutional unit derived from the monomer is 1% by mass or more and 20% by mass or less of all constitutional units, and
   a hydroxyl value is 1 mg KOH/g or less.
[2] The water-dispersible resin particle according to [1], further comprising a constitutional unit derived from another monomer different from the monomer having one or more amide groups,
   wherein a glass transition temperature of a homopolymer obtained by polymerizing the another monomer is 80°C or higher, and
   a content of the constitutional unit derived from the another monomer is 70% by mass or more of all constitutional units.
[3] A water-borne coating composition comprising:
   the water-dispersible resin particle of [1] or [2];
   a coating film-forming resin;
   a curing agent;
   a pigment; and
   a diluent component containing water.
[4] The water-borne coating composition of [3], wherein
   the diluent component further contains an organic solvent,
   the organic solvent contains a first organic solvent having a solubility in water at 20°C of 0.1% by mass or more and 7% by mass or less and a second organic solvent having a solubility in water at 20°C of less than 0.1% by mass,
   a content of the first organic solvent is 0.4% by mass or more and 5% by mass or less, and
   a content of the second organic solvent is 0.05% by mass or more and 2.5% by mass or less.
[5] The water-borne coating composition of [3] or [4], wherein the pigment contains at least one selected from the group consisting of a coloring pigment, a scaly pigment, and an extender pigment.
[6] A coated article comprising:
   an article to be coated; and
   a base coating film formed on the article to be coated,
   wherein the base coating film is formed of the water-borne coating composition according to any one of [3] to [5].
[7] The coated article of [6], further comprising a clear coating film formed on the base coating film.
[8] A coated article comprising:
   an article to be coated;
   an intermediate coating film formed on the article to be coated; and
   a base coating film formed on the intermediate coating film,
   wherein the base coating film is formed of the water-borne coating composition of any one of [3] to [5].
[9] The coated article of [8], further comprising a clear coating film formed on the base coating film.
[10] A method for producing a coated article, comprising:
   applying a basecoat composition onto an article to be coated to form an uncured base coating film; and
   curing the uncured base coating film,
   wherein the basecoat composition contains the water-borne coating composition of any one of [3] to [5].
[11] The method for producing a coated article of [10], wherein
   the method comprises, after forming the uncured base coating film and before curing, applying a clear coating composition onto the uncured base coating film to form an uncured clear coating film, and
   in curing, the uncured base coating film and the uncured clear coating film are cured.
[12] A method for producing a coated article, comprising:
   applying an intermediate coating composition onto an article to be coated to form an uncured intermediate coating film;
   applying a basecoat composition onto the uncured intermediate coating film to form an uncured base coating film; and
   curing the uncured intermediate coating film and the uncured base coating film,
   wherein the basecoat composition contains the water-borne coating composition of any one of [3] to [5].
[13] The method for producing a coated article of [12], wherein
   the method comprises, after forming the uncured base coating film and before curing, applying a clear coating composition onto the uncured base coating film to form an uncured clear coating film, and
   in curing, the uncured intermediate coating film, the uncured base coating film and the uncured clear coating film are cured.
[14] A method for producing a coated article, comprising:
   applying an intermediate coating composition onto an article to be coated to form an uncured intermediate coating film;
   first curing the uncured intermediate coating film;
   applying a basecoat composition onto the cured intermediate coating film to form an uncured base coating film; and
   second curing the uncured base coating film,
   wherein the basecoat composition contains the water-borne coating composition of any one of [3] to [5].
[15] The method for producing a coated article of [14], wherein
   the method comprises, after forming the uncured base coating film and before second curing, a applying a clear coating composition onto the uncured base coating film to form an uncured clear coating film, and
   in second curing, the uncured base coating film and the uncured clear coating film are cured.

### INDUSTRIAL APPLICABILITY

The water-dispersible resin particle of the present invention is suitably used particularly for a coating composition for coating an automobile body.

This application claims priority based on Japanese Patent Application No. 2022-108416, which was filed in Japan on July 5, 2022, the disclosure of which application is incorporated herein by reference in its entirety.

### EXPLANATION OF REFERENCES

- 10A, 10B, 10C, 10D: Coated article
- 11: Article to be coated
- 12: Base coating film
- 13: Clear coating film
- 14: Intermediate coating film

## Claims

1. A water-dispersible resin particle comprising a constitutional unit derived from a monomer having one or more amide groups,
wherein a content of the constitutional unit derived from the monomer is 1% by mass or more and 20% by mass or less of all constitutional units, and
a hydroxyl value is 1 mg KOH/g or less.

2. The water-dispersible resin particle according to claim 1, further comprising a constitutional unit derived from another monomer different from the monomer having one or more amide groups,
wherein a glass transition temperature of a homopolymer obtained by polymerizing the another monomer is 80°C or higher, and
a content of the constitutional unit derived from the another monomer is 70% by mass or more of all constitutional units.

3. A water-borne coating composition comprising:
the water-dispersible resin particle according to claim 1 or 2;
a coating film-forming resin;
a curing agent;
a pigment; and
a diluent component containing water.

4. The water-borne coating composition according to claim 3, wherein
the diluent component further contains an organic solvent,
the organic solvent contains a first organic solvent having a solubility in water at 20°C of 0.1% by mass or more and 7% by mass or less and a second organic solvent having a solubility in water at 20°C of less than 0.1% by mass,
a content of the first organic solvent is 0.4% by mass or more and 5% by mass or less, and
a content of the second organic solvent is 0.05% by mass or more and 2.5% by mass or less.

5. The water-borne coating composition according to claim 3 or 4, wherein the pigment contains at least one selected from the group consisting of a coloring pigment, a scaly pigment, and an extender pigment.

6. A coated article comprising:
an article to be coated; and
a base coating film formed on the article to be coated,
wherein the base coating film is formed of the water-borne coating composition according to any one of claims 3 to 5.

7. The coated article according to claim 6, further comprising a clear coating film formed on the base coating film.

8. A coated article comprising:
an article to be coated;
an intermediate coating film formed on the article to be coated; and
a base coating film formed on the intermediate coating film,
wherein the base coating film is formed of the water-borne coating composition according to any one of claims 3 to 5.

9. The coated article according to claim 8, further comprising a clear coating film formed on the base coating film.

10. A method for producing a coated article, comprising:
applying a basecoat composition onto an article to be coated to form an uncured base coating film; and
curing the uncured base coating film,
wherein the basecoat composition contains the water-borne coating composition according to any one of claims 3 to 5.

11. The method for producing a coated article according to claim 10, wherein
the method comprises, after forming the uncured base coating film and before curing, applying a clear coating composition onto the uncured base coating film to form an uncured clear coating film, and
in curing, the uncured base coating film and the uncured clear coating film are cured.

12. A method for producing a coated article, comprising:
applying an intermediate coating composition onto an article to be coated to form an uncured intermediate coating film;
applying a basecoat composition onto the uncured intermediate coating film to form an uncured base coating film; and
curing the uncured intermediate coating film and the uncured base coating film,
wherein the basecoat composition contains the water-borne coating composition according to any one of claims 3 to 5.

13. The method for producing a coated article according to claim 12, wherein
the method comprises, after forming the uncured base coating film and before curing, applying a clear coating composition onto the uncured base coating film to form an uncured clear coating film, and
in curing, the uncured intermediate coating film, the uncured base coating film and the uncured clear coating film are cured.

14. A method for producing a coated article, comprising:
applying an intermediate coating composition onto an article to be coated to form an uncured intermediate coating film;
first curing the uncured intermediate coating film;
applying a basecoat composition onto the cured intermediate coating film to form an uncured base coating film; and
second curing the uncured base coating film,
wherein the basecoat composition contains the water-borne coating composition according to any one of claims 3 to 5.

15. The method for producing a coated article according to claim 14, wherein
the method comprises, after forming the uncured base coating film and before second curing, a applying a clear coating composition onto the uncured base coating film to form an uncured clear coating film, and
in second curing, the uncured base coating film and the uncured clear coating film are cured.
